(19) 

Europäisches
Patentamt

European
Patent Office

Office européen
des brevets

(11) **EP 4 542 879 A1**

(12) **EUROPEAN PATENT APPLICATION**
published in accordance with Art. 153(4) EPC

(43) Date of publication:
**23.04.2025 Bulletin 2025/17**

(21) Application number: **23854083.5**

(22) Date of filing: **21.06.2023**

(51) International Patent Classification (IPC):
**H04B 7/185** (2006.01)

(52) Cooperative Patent Classification (CPC):
**H04B 7/185; H04W 48/16; H04W 74/0833**

(86) International application number:
**PCT/CN2023/101650**

(87) International publication number:
**WO 2024/037178 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.08.2022 CN 202210976529**

(71) Applicant: **Huawei Technologies Co., Ltd.
Shenzhen, Guangdong 518129 (CN)**

(72) Inventors:
• **SHI, Meng
Shenzhen, Guangdong 518129 (CN)**

• **LIAO, Shuri
Shenzhen, Guangdong 518129 (CN)**
• **DOU, Shengyue
Shenzhen, Guangdong 518129 (CN)**
• **BAI, Zhongjin
Shenzhen, Guangdong 518129 (CN)**
• **WEI, Jingxin
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION APPARATUS**

(57)    This application provides a communication method and a communication apparatus. A terminal receives a synchronization signal/physical broadcast channel block SSB, where the SSB may carry configuration information used to determine a time domain position of search space of scheduling information of a first system information block SIB, the first SIB is a SIB other than a SIB 1, and the first SIB is used to carry information related to random access of the terminal. The terminal may determine the time domain position of the search space of the scheduling information of the first SIB based on first configuration information. In the foregoing solution, the terminal can monitor and receive the scheduling information of the first SIB and the first SIB without obtaining the SIB 1. This helps reduce an access delay of the terminal.

400

FIG. 4

**EP 4 542 879 A1**

## Description

This application claims priority to Chinese Patent Application No. 202210976529.1, filed with the China National Intellectual Property Administration on August 15, 2022 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

Considering an advantage that satellites are not vulnerable to natural disasters or external damage or another advantage, using the satellites as network devices (such as base stations) in mobile communication systems is currently being studied to provide communication services for some regions such as oceans and forests. Different from a terrestrial network device, the satellite moves at a high speed relative to the ground and a signal propagation distance is longer, so that a signal path loss of the satellite as the network device is greater. In addition, due to high-speed movement of the satellite, coverage and service time of a single satellite and each beam of the single satellite are limited. Therefore, a communication scenario imposes a higher requirement on an access delay of a terminal.

Therefore, how to reduce the access delay of the terminal becomes an urgent problem to be resolved.

## SUMMARY

This application provides a communication method and a communication apparatus, to reduce an access delay of a terminal.

According to a first aspect, this application provides a communication method. The method may be performed by a terminal, or may be performed by a module or a unit in the terminal. For ease of description, these components are collectively referred to as the terminal in the following.

The method includes: The terminal receives a first synchronization signal/physical broadcast channel block (synchronization signal/physical broadcast channel block, SS/PBCH block or SSB), where the first SSB includes first configuration information, the first configuration information is used to determine a time domain position of first search space of first scheduling information, the first scheduling information is used to schedule a first system information block (system information block, SIB), the first SIB is an information block other than a system information block 1 (system information block 1, SIB 1), and the first SIB is used to carry information related to random access of the terminal. The terminal determines the time domain position of the first search space based on the first configuration information. The terminal detects the first scheduling information at the time domain position of the first search space.

The "information related to random access of the terminal" may also be described as "information that is except the SIB 1 and that is used by the terminal to perform random access".

In the conventional technology, an SSB carries only configuration information of a time domain position of search space of scheduling information of the SIB 1, and configuration information of a time domain position of search space of scheduling information of another SIB that is used to carry the information related to random access of the terminal is carried in the SIB 1. In other words, obtaining of the another SIB that is used to carry the information related to random access of the terminal depends on data parsing of the SIB 1. Based on the foregoing method, a time domain position of search space of scheduling information of the first SIB may be determined based on the first configuration information carried in the first SSB, and the search space of the scheduling information of the first SIB may be determined to be unbound from the SIB 1. In other words, the scheduling information of the first SIB and the first SIB can be monitored (monitored) and received without a need to obtain the SIB 1. This helps reduce an access delay of the terminal.

With reference to the first aspect, in a possible implementation, that the terminal determines the time domain position of the first search space based on the first configuration information includes: The terminal obtains a first offset and a first spacing based on the first configuration information, where the first offset is an offset of a control resource set (control resource set, CORESET) of the first SIB relative to a start position of a system frame in which the first SSB is located, and the first spacing is a spacing between time domain positions of CORESETs of first SIBs corresponding to two adjacent SSBs. The terminal determines the time domain position of the first search space based on the first offset and the first spacing.

Based on the foregoing method, the terminal may obtain the first offset and the first spacing based on the first configuration information carried in the first SSB, to determine the time domain position of the search space of the first scheduling information. In this way, search space of scheduling information of the first SIB can be determined to be unbound from the SIB 1. This helps reduce an access delay of the terminal.

With reference to the first aspect or any implementation of the first aspect, in another possible implementation, the first SSB further includes an index of the first SSB, information used to determine a subcarrier spacing, and a number of the system frame in which the first SSB is located. That the terminal determines the time domain position of the first search space based on the first offset and the first spacing includes: The terminal determines the time domain position of the first search space based on the first offset, the first spacing, the index of the first SSB, the information used to determine the subcarrier spacing, and the number of the system frame in which the first SSB is located, where a start slot of the time domain position of the first search space is a first slot of a first system frame.

A number of the first slot satisfies: $n_1 = (O_1 * 2^{\mu} + \left\lfloor (i \bmod \overline{L_{\max}}) * M_1 \right\rfloor) \bmod N_{slot}^{frame,\mu}$ .

A number of the first system frame satisfies:

If

$$\left\lfloor (O_1 * 2^{\mu} + \left\lfloor (i \bmod \overline{L_{\max}}) * M_1 \right\rfloor) / N_{slot}^{frame,\mu} \right\rfloor = 1, \quad SFN_1 = SFN_{SSB\_i} + 1;$$

or

if

$$\left\lfloor (O_1 * 2^{\mu} + \left\lfloor (i \bmod \overline{L_{\max}}) * M_1 \right\rfloor) / N_{slot}^{frame,\mu} \right\rfloor = 0, \quad SFN_1 = SFN_{SSB\_i},$$

where

$n_1$ is the number of the first slot, $O_1$ is the first offset, $\mu$ is the information used to determine the subcarrier spacing, $2^{\mu}$ is a quantity of slots in 1 millisecond, i is the index of the first SSB, $\overline{L_{\max}}$ is a maximum quantity of candidate SSBs in a half-frame, $M_1$ is the first spacing, $N_{slot}^{frame,\mu}$ is a quantity of slots in one system frame, $SFN_1$ is the number of the first system frame, $SFN_{SSB\_i}$ is the number of the system frame in which the first SSB is located, and L J represents rounding down to the nearest integer.

Based on the foregoing method, the terminal may determine the time domain position of the search space of the first scheduling information in a formula calculation manner based on the information carried in the first SSB, the first offset, and the first spacing. In this way, search space of scheduling information of the first SIB can be determined to be unbound from the SIB 1. This helps reduce an access delay of the terminal.

In addition, $i \bmod \overline{L_{\max}}$ processing performed on i can ensure that relative positions of the SSB, the SIB 1, and the first SIB that need to be carried in a plurality of system frames are fixed when a quantity of SSBs exceeds the maximum quantity of candidate SSBs in the half-frame. This helps avoid a case in which the SIB 1 associated with the first SSB and the first SIB are sent before the first SSB.

With reference to the first aspect or any implementation of the first aspect, in another possible implementation, the first offset and the first spacing belong to a first table; or the first offset and the first spacing do not belong to a first table, where the first table is a table of a second offset and a second spacing, the second offset is an offset of a control resource set 0 (control resource set 0, CORESET 0) corresponding to the first SSB relative to the start position of the system frame in which the first SSB is located, the second spacing is a spacing between time domain positions of CORESETs 0 corresponding to two adjacent SSBs, and the CORESET 0 is a CORESET corresponding to the SIB 1.

For example, when the first configuration information reuses configuration information of search space of scheduling information of the SIB 1, the first offset and the first spacing may belong to the first table.

For example, when the first configuration information is configuration information newly added to the first SSB, the first offset and the first spacing may not belong to the first table. In other words, (the first offset and the first spacing) and (the second offset and the second spacing) belong to different parameter tables.

With reference to the first aspect or any implementation of the first aspect, in another possible implementation, the first offset $O_1$ satisfies: $O_1 = O \pm 1/2^{\mu}$, where $O$ is the second offset, the second offset is the offset of the CORESET 0 corresponding to the first SSB relative to the start position of the system frame in which the first SSB is located, $\mu$ is the information used to determine the subcarrier spacing, and the CORESET 0 is the CORESET corresponding to the SIB 1.

Based on the foregoing method, scheduling information of the first SIB and scheduling information of the SIB 1 can be sent in adjacent slots, and a probability that the terminal faces beam switching is low. This helps improve demodulation performance.

With reference to the first aspect or any implementation of the first aspect, in another possible implementation, that the terminal determines the time domain position of the first search space based on the first configuration information includes: The terminal obtains a third offset based on the first configuration information, where the third offset is an offset between a start slot of the first search space and a start slot of second search space of second scheduling information, and the second scheduling information is used to schedule the SIB 1. The terminal determines the time domain position of the first search space based on the third offset.

Based on the foregoing method, the terminal may obtain the third offset based on the first configuration information carried in the first SSB, to determine the time domain position of the search space of the first scheduling information. In this way, search space of scheduling information of the first SIB can be determined to be unbound from the SIB 1. This helps reduce an access delay of the terminal.

With reference to the first aspect or any implementation of the first aspect, in another possible implementation, a start slot of the time domain position of the first search space is a first slot of a first system frame.

A number of the first slot satisfies: $n_1 = n_0 + Offset_1$.

A number of the first system frame satisfies:

If

$$\left\lfloor n_1 / N_{slot}^{frame,\mu} \right\rfloor = 1, \quad SFN_1 = SFN_{SSB\_i} + 1;$$

or

if

$$\left\lfloor n_1 / N_{slot}^{frame,\mu} \right\rfloor = 0, \quad SFN_1 = SFN_{SSB\_i},$$

where

$n_1$ is the number of the first slot, $n_0$ is a number of the start slot of the second search space, $Offset_1$ is the third offset, $N_{slot}^{frame,\mu}$ is a quantity of slots in one system frame, $SFN_1$ is the number of the first system frame, $SFN_{SSB\_i}$ is a number of a system frame in which the first SSB is located, and $\lfloor \ \rfloor$ represents rounding down to the nearest integer.

Based on the foregoing method, the terminal may determine the time domain position of the search space of the first scheduling information in a formula calculation manner based on the information carried in the first SSB and the third offset. In this way, search space of scheduling information of the first SIB can be determined to be unbound from the SIB 1. This helps reduce an access delay of the terminal.

With reference to the first aspect or any implementation of the first aspect, in another possible implementation, the third offset belongs to a first table; or the third offset does not belong to a first table, where the first table is a table of a second offset and a second spacing, the second offset is an offset of a CORESET 0 corresponding to the first SSB relative to a start position of the system frame in which the first SSB is located, the second spacing is a spacing between time domain positions of CORESETs 0 corresponding to two adjacent SSBs, and the CORESET 0 is a CORESET corresponding to the SIB 1.

For example, when the first configuration information reuses configuration information of search space of scheduling information of the SIB 1, the third offset may belong to the first table.

For example, when the first configuration information is configuration information newly added to the first SSB, the third offset may not belong to the first table. In other words, (the third offset) and (the second offset and the second spacing) belong to different parameter tables.

With reference to the first aspect or any implementation of the first aspect, in another possible implementation, the third offset is one slot.

Based on the foregoing method, scheduling information of the first SIB and scheduling information of the SIB 1 can be sent in adjacent slots, and a probability that the terminal faces beam switching is low. This helps improve demodulation performance.

With reference to the first aspect or any implementation of the first aspect, in another possible implementation, the time domain position of the first search space is the same as a time domain position of second search space of second scheduling information, and the second scheduling information is used to schedule the SIB 1. That the terminal detects the first scheduling information at the time domain position of the first search space includes: The terminal detects the first scheduling information at the time domain position of the first search space by using a first scrambling sequence, where the first scheduling information is scrambled by using the first scrambling sequence, and the first scrambling sequence is different from a second scrambling sequence used for the second scheduling information.

Based on the foregoing method, search space of scheduling information of the first SIB may be associated with search space of scheduling information of the SIB 1, and the scheduling information of the first SIB and the scheduling information of the SIB 1 are distinguished by using different scrambling sequences. Similarly, the search space of the scheduling information of the first SIB can be determined to be unbound from the SIB 1. This helps reduce an access delay of the terminal.

With reference to the first aspect or any implementation of the first aspect, in another possible implementation, the number $n_0$ of the start slot of the second search space satisfies:

$$n_0 = (O*2^{\mu} + \left\lfloor (i \bmod \overline{L_{\max}}) * M \right\rfloor) \bmod N_{slot}^{frame,\mu},$$

where

$O$ is the second offset, the second offset is the offset of the CORESET 0 corresponding to the first SSB relative to the start position of the system frame in which the first SSB is located, $\mu$ is information used to determine a subcarrier spacing, $2^{\mu}$ is a quantity of slots in 1 millisecond, $i$ is an index of the first SSB, $\overline{L_{max}}$ is a maximum quantity of candidate SSBs in a half-frame, M is the second spacing, the second spacing is the spacing between time domain positions of CORESETs 0 corresponding to two adjacent SSBs, $N_{slot}^{frame,\mu}$ is the quantity of slots in one system frame, ⌊ ⌋ represents rounding down to the nearest integer, and the CORESET 0 is the CORESET corresponding to the SIB 1.

Based on the foregoing method, $i \bmod \overline{L_{\max}}$ processing performed on i can ensure that relative positions of the SSB, the SIB 1, and the first SIB that need to be carried in a plurality of system frames are fixed when a quantity of SSBs exceeds the maximum quantity of candidate SSBs in the half-frame. This helps avoid a case in which the SIB 1 associated with the first SSB and the first SIB are sent before the first SSB.

With reference to the first aspect or any implementation of the first aspect, in another possible implementation, the first configuration information is configuration information of the time domain position of the second search space of the second scheduling information, and the second scheduling information is used to schedule the SIB 1; or the first configuration information is configuration information of the time domain position of the first search space.

Based on the foregoing method, when the first configuration information is the configuration information of the time domain position of the second search space of the second scheduling information, modifications to the first SSB may be reduced. When the first configuration information is the configuration information of the time domain position of the first search space (that is, the first configuration information is newly added to the first SSB), a design of a parameter table is simple, and the configuration information of the search space of the first scheduling information and the configuration information of the search space of the second scheduling information are independent of each other, so that configuration can be more flexible.

With reference to the first aspect or any implementation of the first aspect, in another possible implementation, the first SIB includes a system information block 19 (system information block 1, SIB 19), and the SIB 19 is used to carry information related to a satellite ephemeris.

Optionally, the information related to the satellite ephemeris includes at least one of the following information: the ephemeris, a timing advance related parameter, valid time, or reference time.

According to a second aspect, this application provides a communication method. The method may be performed by a network device, or may be performed by a module or a unit in the network device. For ease of description, these components are collectively referred to as the network device in the following.

The method includes: The network device sends a first SSB, where the first SSB includes first configuration information, the first configuration information is used to determine a time domain position of first search space of first scheduling information, the first scheduling information is used to schedule a first SIB, the first SIB is an information block other than a SIB 1, and the first SIB is used to carry information related to random access of the terminal. The network device sends the first scheduling information at the time domain position of the first search space.

Based on the foregoing method, a time domain position of search space of scheduling information of the first SIB may be determined based on the first configuration information carried in the first SSB, and the search space of the scheduling information of the first SIB may be determined to be unbound from the SIB 1. In other words, the scheduling information of the first SIB and the first SIB can be monitored and received without a need to obtain the SIB 1. This helps reduce an access delay of a terminal.

With reference to the second aspect, in a possible implementation, the first configuration information is used to obtain a first offset and a first spacing, where the first offset is an offset of a CORESET of the first SIB relative to a start position of a system frame in which the first SSB is located, and the first spacing is a spacing between time domain positions of CORESETs of first SIBs corresponding to two adjacent SSBs.

Based on the foregoing method, a terminal may obtain the first offset and the first spacing based on the first configuration information carried in the first SSB, to determine the time domain position of the search space of the first scheduling information. In this way, search space of scheduling information of the first SIB can be determined to be unbound from the SIB 1. This helps reduce an access delay of the terminal.

With reference to the second aspect or any implementation of the second aspect, in another possible implementation, the first SSB further includes an index of the first SSB, information used to determine a subcarrier spacing, and a number of the system frame in which the first SSB is located, and a start slot of the time domain position of the first search space is a first slot of a first system frame.

A number of the first slot satisfies: $n_1 = (O_1 * 2^{\mu} + \lfloor (i \bmod \overline{L_{\max}}) * M_1 \rfloor) \bmod N_{slot}^{frame,\mu}$ .

A number of the first system frame satisfies:

If

$$\lfloor (O_1 * 2^{\mu} + \lfloor (i \bmod \overline{L_{\max}}) * M_1 \rfloor) / N_{slot}^{frame,\mu} \rfloor = 1, \quad SFN_1 = SFN_{SSB\_i} + 1;$$

or

if

$$\lfloor (O_1 * 2^{\mu} + \lfloor (i \bmod \overline{L_{\max}}) * M_1 \rfloor) / N_{slot}^{frame,\mu} \rfloor = 0, \quad SFN_1 = SFN_{SSB\_i},$$

where

$n_1$ is the number of the first slot, $O_1$ is the first offset, $\mu$ is the information used to determine the subcarrier spacing, $2^{\mu}$ is a quantity of slots in 1 millisecond, i is the index of the first SSB, $\overline{L_{\max}}$ is a maximum quantity of candidate SSBs in a half-frame, $M_1$ is the first spacing, $N_{slot}^{frame,\mu}$ is a quantity of slots in one system frame, $SFN_1$ is the number of the first system frame, $SFN_{SSB\_i}$ is the number of the system frame in which the first SSB is located, and $\lfloor \rfloor$ represents rounding down to the nearest integer.

Based on the foregoing method, a terminal may determine the time domain position of the search space of the first scheduling information in a formula calculation manner based on the information carried in the first SSB, the first offset, and the first spacing. In this way, search space of scheduling information of the first SIB can be determined to be unbound from the SIB 1. This helps reduce an access delay of the terminal.

In addition, $i \bmod \overline{L_{\max}}$ processing performed on i can ensure that relative positions of the SSB, the SIB 1, and the first SIB that need to be carried in a plurality of system frames are fixed when a quantity of SSBs exceeds the maximum quantity of candidate SSBs in the half-frame. This helps avoid a case in which the SIB 1 associated with the first SSB and the first SIB are sent before the first SSB.

With reference to the second aspect or any implementation of the second aspect, in another possible implementation, the first offset and the first spacing belong to a first table; or the first offset and the first spacing do not belong to a first table, where the first table is a table of a second offset and a second spacing, the second offset is an offset of a CORESET 0 corresponding to the first SSB relative to the start position of the system frame in which the first SSB is located, the second spacing is a spacing between time domain positions of CORESETs 0 corresponding to two adjacent SSBs, and the CORESET 0 is a CORESET corresponding to the SIB 1.

For example, when the first configuration information reuses configuration information of search space of scheduling information of the SIB 1, the first offset and the first spacing may belong to the first table.

For example, when the first configuration information is configuration information newly added to the first SSB, the first offset and the first spacing may not belong to the first table. In other words, (the first offset and the first spacing) and (the second offset and the second spacing) belong to different parameter tables.

With reference to the second aspect or any implementation of the second aspect, in another possible implementation, the first offset $O_1$ satisfies: $O_1 = O \pm 1/2^{\mu}$, where $O$ is the second offset, the second offset is the offset of the CORESET 0 corresponding to the first SSB relative to the start position of the system frame in which the first SSB is located, $\mu$ is the information used to determine the subcarrier spacing, and the CORESET 0 is the CORESET corresponding to the SIB 1.

Based on the foregoing method, scheduling information of the first SIB and scheduling information of the SIB 1 can be sent in adjacent slots, and a probability that a terminal faces beam switching is low. This helps improve demodulation performance.

With reference to the second aspect or any implementation of the second aspect, in another possible implementation, the first configuration information is used to obtain a third offset, the third offset is an offset between a start slot of the first search space and a start slot of second search space of second scheduling information, and the second scheduling information is used to schedule the SIB 1.

Based on the foregoing method, a terminal may obtain the third offset based on the first configuration information carried in the first SSB, to determine the time domain position of the search space of the first scheduling information. In this way, search space of scheduling information of the first SIB can be determined to be unbound from the SIB 1. This helps reduce an access delay of the terminal.

With reference to the second aspect or any implementation of the second aspect, in another possible implementation, a start slot of the time domain position of the first search space is a first slot of a first system frame.

A number of the first slot satisfies: $n_1 = n_0 + Offset_1$.

A number of the first system frame satisfies:

If

$$\left\lfloor n_1 / N_{slot}^{frame,\mu} \right\rfloor = 1, \quad SFN_1 = SFN_{SSB\_i} + 1;$$

or

if

$$\left\lfloor n_1 / N_{slot}^{frame,\mu} \right\rfloor = 0, \quad SFN_1 = SFN_{SSB\_i},$$

where

$n_1$ is the number of the first slot, $n_0$ is a number of the start slot of the second search space, $Offset_1$ is the third offset, $N_{slot}^{frame,\mu}$ is a quantity of slots in one system frame, $SFN_1$ is the number of the first system frame, $SFN_{SSB\_i}$ is a number of a system frame in which the first SSB is located, and $\lfloor \rfloor$ represents rounding down to the nearest integer.

Based on the foregoing method, a terminal may determine the time domain position of the search space of the first scheduling information in a formula calculation manner based on the information carried in the first SSB and the third offset. In this way, search space of scheduling information of the first SIB can be determined to be unbound from the SIB 1. This helps reduce an access delay of the terminal.

With reference to the second aspect or any implementation of the second aspect, in another possible implementation, the third offset belongs to a first table; or the third offset does not belong to a first table, where the first table is a table of a second offset and a second spacing, the second offset is an offset of a CORESET 0 corresponding to the first SSB relative to a start position of the system frame in which the first SSB is located, the second spacing is a spacing between time domain positions of CORESETs 0 corresponding to two adjacent SSBs, and the CORESET 0 is a CORESET corresponding to the SIB 1.

For example, when the first configuration information reuses configuration information of search space of scheduling information of the SIB 1, the third offset may belong to the first table.

For example, when the first configuration information is configuration information newly added to the first SSB, the third offset may not belong to the first table. In other words, (the third offset) and (the second offset and the second spacing) belong to different parameter tables.

With reference to the second aspect or any implementation of the second aspect, in another possible implementation, the third offset is one slot.

Based on the foregoing method, scheduling information of the first SIB and scheduling information of the SIB 1 can be sent in adjacent slots, and a probability that a terminal faces beam switching is low. This helps improve demodulation performance.

With reference to the second aspect or any implementation of the second aspect, in another possible implementation, the time domain position of the first search space is the same as a time domain position of second search space of second scheduling information, the second scheduling information is used to schedule the SIB 1, the first scheduling information is scrambled by using a first scrambling sequence, and the first scrambling sequence is different from a second scrambling sequence used for the second scheduling information.

Based on the foregoing method, search space of scheduling information of the first SIB may be associated with search space of scheduling information of the SIB 1, and the scheduling information of the first SIB and the scheduling information of the SIB 1 are distinguished by using different scrambling sequences. Similarly, the search space of the scheduling information of the first SIB can be determined to be unbound from the SIB 1. This helps reduce an access delay of a terminal.

With reference to the second aspect or any implementation of the second aspect, in another possible implementation, the number $n_0$ of the start slot of the second search space satisfies:

$$n_0 = (O * 2^\mu + \left\lfloor (i \bmod \overline{L_{\max}}) * M \right\rfloor) \bmod N_{slot}^{frame,\mu},$$

where

$O$ is the second offset, the second offset is the offset of the CORESET 0 corresponding to the first SSB relative to the start position of the system frame in which the first SSB is located, $\mu$ is information used to determine a subcarrier spacing, $2^\mu$ is a quantity of slots in 1 millisecond, $i$ is an index of the first SSB, $\overline{L_{\max}}$ is a maximum quantity of candidate SSBs in a half-frame, $M$ is the second spacing, the second spacing is the spacing between time domain positions of CORESETs 0 corresponding to two adjacent SSBs, $N_{slot}^{frame,\mu}$ is the quantity of slots in one system frame, $\lfloor \ \rfloor$ represents rounding down to the nearest integer, and the CORESET 0 is the CORESET corresponding to the SIB 1.

Based on the foregoing method, $i \bmod \overline{L_{\max}}$ processing performed on $i$ can ensure that relative positions of the SSB, the SIB 1, and the first SIB that need to be carried in a plurality of system frames are fixed when a quantity of SSBs exceeds the maximum quantity of candidate SSBs in the half-frame. This helps avoid a case in which the SIB 1 associated with the first SSB and the first SIB are sent before the first SSB.

With reference to the second aspect or any implementation of the second aspect, in another possible implementation, the first configuration information is configuration information of the time domain position of the second search space of the second scheduling information, and the second scheduling information is used to schedule the SIB 1; or the first configuration information is configuration information of the time domain position of the first search space.

Based on the foregoing method, when the first configuration information is the configuration information of the time domain position of the second search space of the second scheduling information, modifications to the first SSB may be reduced. When the first configuration information is the configuration information of the time domain position of the first search space (that is, the first configuration information is newly added to the first SSB), a design of a parameter table is simple, and the configuration information of the search space of the first scheduling information and the configuration information of the search space of the second scheduling information are independent of each other, so that configuration can be more flexible.

With reference to the second aspect or any implementation of the second aspect, in another possible implementation, the first SIB includes a SIB 19, and the SIB 19 is used to carry information related to a satellite ephemeris.

Optionally, the information related to the satellite ephemeris includes at least one of the following information: the ephemeris, a timing advance related parameter, valid time, or reference time.

According to a third aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is a terminal and/or a network device. When the apparatus is the terminal and/or the network device, the communication unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in the terminal and/or the network device. When the apparatus is the chip, the chip system, or the circuit used in the terminal and/or the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fourth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a terminal and/or a network device.

In another implementation, the apparatus is a chip, a chip system, or a circuit used in the terminal and/or the network device.

According to a fifth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a sixth aspect, a processor is provided, and is configured to perform the method provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to a seventh aspect, a computer-readable storage medium is provided. The computer-readable storage medium stores program code to be executed by a device, and the program code is used to perform the method provided in any one of the foregoing aspects or the implementations of the foregoing aspects.

According to an eighth aspect, a computer program product including instructions is provided. When the computer program product runs on a computer, the computer is enabled to perform the method provided in any one of the foregoing aspects or the implementations of the foregoing aspects.

According to a ninth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

According to a tenth aspect, a communication system is provided, including the foregoing terminal and/or network device.

**BRIEF DESCRIPTION OF DRAWINGS**

FIG. 1 is a diagram of a communication system to which an embodiment of this application may be applied;

FIG. 2 is a diagram of another communication system to which an embodiment of this application may be applied;

FIG. 3 is a diagram of a satellite communication scenario to which an embodiment of this application may be applied;

FIG. 4 is a schematic flowchart of a communication method 400 according to this application;

FIG. 5 shows an example of a communication method according to this application;

FIG. 6 is a diagram of a time domain mode of an SSB, a SIB 1, and a SIB 19;

FIG. 7 is a diagram of a structure of an apparatus according to an embodiment of this application; and

FIG. 8 is a diagram of another structure of an apparatus according to an embodiment of this application.

**DESCRIPTION OF EMBODIMENTS**

For ease of understanding of embodiments of this application, before embodiments of this application are described, the following descriptions are first provided.

In this application, "indicating" or "indicate" may include a direct indication and an indirect indication, or "indicating" or "indicate" may be an explicit indication and/or an implicit indication. For example, when a piece of information is described to indicate information I, the information may directly indicate I or indirectly indicate I, but it does not indicate that the information definitely carries I. For another example, the implicit indication may be based on a position and/or a resource used for transmission; and the explicit indication may be based on one or more parameters, and/or one or more indexes, and/or one or more bit modes represented by the explicit indication.

Definitions listed for many features in this application are merely used to explain functions of the features by using examples. For detailed content of the definitions, refer to a conventional technology.

In the following embodiments, first, second, third, fourth, and various numbers are merely used for differentiation for ease of description, but are not used to limit the scope of embodiments of this application, for example, used for differentiation between different fields and different information.

"Pre-definition" may be implemented by pre-storing corresponding code or a corresponding table in a device; or implemented in another manner of indicating related information. A specific implementation of the "pre-definition" is not limited in this application. "Storage" may be storage in one or more memories. A type of the memory may be a storage medium in any form. This is not limited in this application.

A "protocol" in embodiments of this application may be a standard protocol in the communication field, for example, may include a long term evolution (long term evolution, LTE) protocol, a new radio (new radio, NR) protocol, and a related protocol applied to a future communication system. This is not limited in this application.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, words such as "exemplary", "for example", "example", and "in an (another) example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

The terms "include", "comprise", "have", and their variants all mean "include but are not limited to", unless otherwise specifically emphasized in another manner.

"At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one item (piece) of the following" or a similar expression thereof means any combination of these items, including a singular item (piece) or any combination of plural items (pieces). For example, at least one item (piece) of a, b, and c may represent a, b, c, a and b, a and c, b and c, or a, b, and c. Each of a, b, and c may be in a singular form or a plural form.

In embodiments of this application, related descriptions about sending a message, information, or data by a network element A to a network element B, and receiving, by the network element B, the message, information, or data from the network element A are intended to describe a network element to which the message, information, or data is to be sent. Whether the message, information, or data is directly sent or indirectly sent through another network element is not limited.

In embodiments of this application, descriptions such as "when", "in a case of", and "if" all mean that a device performs corresponding processing in an objective case, and do not limit time, and the device is not required to perform a determining action during implementation. This does not mean that there is another limitation.

For ease of understanding, a communication system to which embodiments of this application may be applied is first described.

Embodiments of this application may be applied to various communication systems, for example, a long term evolution (long term evolution, LTE) system, an LTE frequency division duplex (frequency division duplex, FDD) system, an LTE time division duplex (time division duplex, TDD) system, a public land mobile network (public land mobile network, PLMN), a 5th generation (5th generation, 5G) system, a 6th generation (6th generation, 6G) system, or a future communication system. The 5G system in this application includes a non-standalone (non-standalone, NSA) 5G mobile communication system or a standalone (standalone, SA) 5G mobile communication system. Embodiments of this application may be further applied to a non-terrestrial communications network (non-terrestrial network, NTN) communication system such as a satellite communication system. Embodiments of this application may be further applied to a device-to-device (device-to-device, D2D) communication system, a sidelink (sidelink, SL) communication system, a machine-to-machine (machine-to-machine, M2M) communication system, a machine-type communications (machine-type communications, MTC) system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

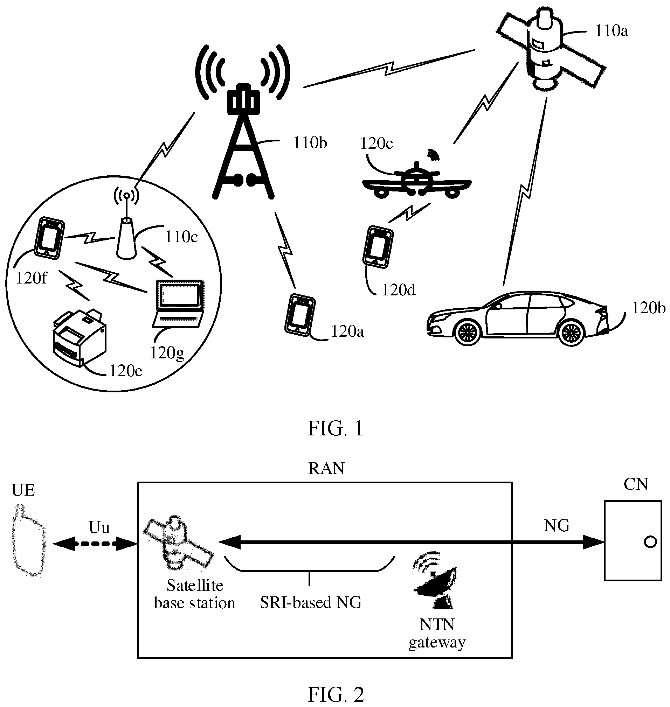

For example, FIG. 1 and FIG. 2 show communication systems to which embodiments of this application may be applied.

FIG. 1 is a diagram of a communication system to which an embodiment of this application may be applied.

As shown in FIG. 1, the communication system may include at least one network device (for example, 110a, 110b, and 110c in FIG. 1), and may further include at least one terminal (for example, 120a to 120g in FIG. 1). The terminal may be mobile or fixed. Each network device may provide communication coverage for a specific geographical region, and may communicate with a terminal located in the coverage region. Network devices may be connected to each other in a wired or wireless manner, a network device may be connected to a terminal in a wired or wireless manner, and terminals may be connected to each other in a wired or wireless manner. FIG. 1 is merely a diagram. The communication system may further include another device, for example, may further include a wireless relay device and a wireless backhaul device.

FIG. 2 is a diagram of another communication system to which an embodiment of this application may be applied.

This embodiment of this application is applicable to a communication system that integrates a terrestrial communication system and a satellite communication system. The communication system may also be referred to as a non-terrestrial network (non-terrestrial network, NTN) communication system.

The terrestrial communication system may be, for example, an LTE system, a universal mobile telecommunications system (universal mobile telecommunications system, UMTS), a 5G system or an NR system, or a communication system developed in a next step of the 5G system. This is not limited herein.

Compared with a conventional communication system, the satellite communication system has wider coverage, and can overcome natural geographical obstacles such as oceans, deserts, and mountains. To overcome disadvantages of the conventional communication system, the satellite communication system may serve as an effective supplement to the conventional communication system. Based on different orbit altitudes, satellite communication systems can be classified into the following three types: a geostationary earth orbit (geostationary earth orbit, GEO) satellite communication system, a medium earth orbit (medium earth orbit, MEO) satellite communication system, and a low earth orbit (low earth orbit, LEO) satellite communication system. The GEO satellite communication system may also be referred to as a synchronous orbit satellite system.

Generally, a GEO satellite is also referred to as a geostationary orbit satellite, and an orbit altitude may be 35,786 kilometers (km). A main advantage of the GEO satellite is that the GEO satellite is stationary relative to the ground and provides a very large coverage area. Disadvantages of the GEO satellite are also prominent. For example, a distance between the GEO satellite and the earth is excessively large, and an antenna with a large diameter is required. For another example, a transmission delay is long, is about 0.5 seconds, and cannot meet a requirement of a real-time service. For still another example, orbit resources are insufficient, transmission costs are high, and coverage cannot be provided for polar regions. An MEO satellite has an orbit altitude of 2,000 km to 35,786 km, and global coverage may be implemented by using a small quantity of satellites. However, the MEO satellite has a transmission delay longer than that of an LEO satellite and is mainly used for positioning and navigation. The LEO satellite has an orbit altitude of 300 km to 2,000 km. Compared with the MEO satellite and the GEO satellite, the LEO satellite has a lower orbit altitude, a shorter data transmission delay, a smaller power loss, and lower transmission costs. Therefore, the LEO satellite communication system has made great progress in recent years.

It is generally considered that compared with terrestrial communication, an NTN has different channel characteristics (for example, a long transmission delay and a large Doppler frequency shift). For example, a round-trip delay of the GEO satellite communication system is 238 milliseconds to 270 milliseconds (ms), and a round-trip delay of the LEO satellite communication system is 8 ms to 20 ms.

An operating mode of the satellite may be classified into a transparent (transparent) transmission mode and a regenerative (regenerative) mode. When the satellite operates in the transparent transmission mode, the satellite has a relay forwarding function. A gateway has functions or some functions of a base station. In this case, the gateway may be considered as a base station. When the satellite operates in the regenerative mode, the satellite has a data processing capability and has functions or some functions of a base station. In this case, the satellite may be considered as a base station.

FIG. 2 is a diagram of an NTN in a regenerative mode.

As shown in FIG. 2, a satellite has some or all functions of a base station, and may be referred to as a satellite base station. The satellite base station may provide a radio access service, and schedule a radio resource for a terminal device that accesses a network via the satellite base station. The satellite base station and the terminal may communicate with each other through a universal terrestrial radio access network-user (universal terrestrial radio access network-user, Uu) interface. The satellite base station and a core network (core network, CN) may communicate with each other through a next generation (next generation, NG) network interface, and the satellite base station and the core network may exchange non-access stratum (non-access stratum, NAS) signaling of the core network and service data of a user through the NG interface. A satellite radio interface (satellite radio interface, SRI) interface is a feeder link between an NTN gateway and the satellite. In FIG. 2, the SRI interface may be used as a part of the NG interface to implement communication and interaction between the satellite base station and the core network.

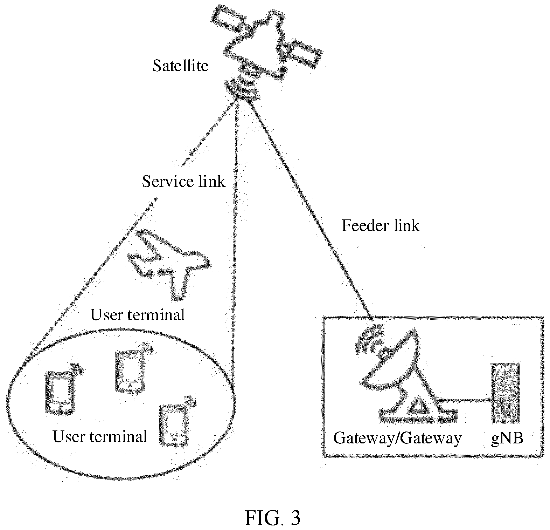

FIG. 3 is a diagram of a satellite communication scenario.

As shown in FIG. 3, in the satellite communication scenario, a network device includes a satellite and a gateway (gateway), and a terminal includes an internet of things terminal, a mobile phone mobile terminal, a high-altitude aircraft, and the like. The terminal may alternatively be a terminal of another form and performance, or the like. This is not limited herein. A link between the satellite and the terminal is referred to as a service link (service link), and a link between the satellite and the gateway is referred to as a feeder link (feeder link). The gateway may also be referred to as a gateway. It should be noted that this embodiment of this application may also be applied to a satellite communication scenario obtained through extension based on FIG. 3.

The terminal in embodiments of this application is a device that can access a wireless communication network. The terminal and the network device may communicate with each other by using an air interface technology (for example, NR or LTE). Terminals may also communicate with each other by using the air interface technology (for example, NR or LTE). The terminal may also be referred to as user equipment (user equipment, UE), a user, an access terminal, a subscriber unit, a subscriber station, a mobile station, a remote station, a remote terminal, a mobile device, a user terminal, a terminal device, a wireless communication device, a user agent, a user apparatus, or the like. For ease of description, these components are collectively referred to as the terminal in the following. The terminal may be widely used in various scenarios, for example, enhanced mobile broadband (enhanced mobile broadband, eMBB), ultra-reliable low-latency communication (ultra-reliable low-latency communication, URLLC), massive machine-type communications (massive machine-type communications, mMTC), D2D, V2X, MTC, IoT, virtual reality, augmented reality, industrial control, self-driving, telemedicine, a smart grid, smart furniture, a smart office, a smart wearable, smart transportation, or a smart city. The terminal may be a mobile phone (for example, 120a, 120d, or 120f in FIG. 1), a tablet computer, a computer (for example, a computer 120g in FIG. 1) having a wireless transceiver function, a wearable device, a vehicle (for example, 120b in FIG. 1), an uncrewed aerial vehicle, a helicopter, an airplane (for example, 120c in FIG. 1), a ship, a robot, a robotic arm, a smart home device (for example, a printer 120e in FIG. 1), or the like. A specific technology and a specific device form that are used by the terminal are not limited in this application.

The network device in embodiments of this application may be a device configured to communicate with the terminal, or may be a device that enables the terminal to access the wireless communication network. The network device may be a base station (base station), a NodeB (NodeB), an evolved NodeB (evolved NodeB, eNodeB or eNB), a transmission reception point (transmission reception point, TRP), a next generation NodeB (next generation NodeB, gNB) in the 5G system, an access network device in an open radio access network (open radio access network, O-RAN or open RAN), a next generation base station in a 6G system, a satellite base station (for example, the satellite base station in FIG. 2) in the NTN, a base station in a future mobile communication system, an access node in a wireless fidelity (wireless fidelity, Wi-Fi) system, or the like. Alternatively, the network device may be a module or a unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The network device may be a macro base station (for example, 110b in FIG. 1), may be a micro base station or an indoor base station (for example, 110c in FIG. 1), or may be a relay node, a donor node, or the like. A specific technology and a specific device form that are used by the network device are not limited in this application.

The network device and/or the terminal may be at a fixed position or mobile. The network device and/or the terminal may be deployed on the land, including an indoor device, an outdoor device, a handheld device, or a vehicle-mounted device; may be deployed on the water surface; or may be deployed on a plane, a balloon, and an artificial satellite in the air. Environments/Scenarios in which the network device and the terminal are located are not limited in this application. The network device and the terminal may be deployed in a same environment/scenario or different environments/scenarios. For example, the network device and the terminal are both deployed on the land. Alternatively, the network device is deployed on the land, and the terminal is deployed on the water surface. Examples are not enumerated.

It should be understood that the foregoing network architecture is merely an example for description, and a network architecture applicable to embodiments of this application is not limited thereto. Any network architecture that can implement functions of the foregoing network elements is applicable to embodiments of this application.

Considering an advantage that satellites are not vulnerable to natural disasters or external damage or another advantage, using the satellites as network devices (such as base stations) in mobile communication systems is currently being studied to provide communication services for some regions such as oceans and forests. Different from a terrestrial network device, the satellite moves at a high speed relative to the ground and a signal propagation distance is longer, so that a signal path loss of the satellite as the network device is greater. In addition, due to high-speed movement of the satellite, coverage and service time of a single satellite and each beam of the single satellite are limited. Therefore, a communication scenario imposes a higher requirement on an access delay of the terminal.

In an initial access phase, as the network device, the satellite needs to send a plurality of beams in sequence, to configure a random access resource for the terminal. A random access process is generally a process starting from sending, by the terminal, a random access preamble (random access preamble, preamble for short) to attempt to access the network device and ending before a basic signaling connection is established between the terminal and the network device. Currently, the network device may broadcast different synchronization signal/physical broadcast channel blocks (synchronization signal/physical broadcast channel blocks, SS/PBCH blocks or SSBs) for different communication regions, and distinguish between the synchronization signal/physical broadcast channel blocks by using indexes (indexes) of the SSBs. Generally, different SSB indexes indicate that downlink synchronization signals in different beam directions cover and serve different regions. After receiving the SSB, the terminal completes timing synchronization, determines a time-frequency position of a SIB 1 based on information in the SSB, and further completes parsing of the SIB 1, to obtain system information of a cell. In addition, the terminal detects a SIB 19 based on search space of the SIB 19 configured in the SIB 1, and completes data parsing of the SIB 19, to obtain ephemeris information of the satellite. After obtaining the system information of the cell and the ephemeris information, the terminal sends the random access preamble on a corresponding uplink resource based on configuration information and the SSB index. The network device may determine, by using the received random access preamble and the corresponding uplink resource, a region in which the terminal is located, and establish a connection to the terminal.

It can be learned from the foregoing content that the search space of the SIB 19 carrying the ephemeris information is configured in the SIB 1. Therefore, to obtain information about the search space of the SIB 19, the SIB 1 needs to be parsed first, that is, obtaining of the SIB 19 depends on data parsing of the SIB 1. However, in the NTN, before sending the random access preamble, the terminal needs to obtain the system information (SIB 1) of the cell and the ephemeris information (SIB 19). Therefore, obtaining of the SIB 19 depends on data parsing of the SIB 1, resulting in an increase of an access delay of the terminal.

In an example, a time sequence is set based on a signaling procedure of an initial access process. In an SSB mode (which may also be referred to as a pattern) (SSB pattern), 20 ms is used as a group, eight SSBs are sent in 2 ms, and the remaining SIB 1 and other system information (other system information, OSI) OSI (including the SIB 19) need to occupy 16 slots (slots), that is, 8 ms. For another blank slot, signaling such as a random access response (random access response, RAR)/Msg4/Paging (paging) needs to be further considered. 256 SSBs require 32 groups, and a complete SSB scanning periodicity requires 32*20=640 ms.

The following needs to be considered for a delay in an initial synchronization phase.

Step 1: SSB searching. It takes at least one SSB periodicity, that is, 640 ms, to find an optimal SSB and complete parsing of a primary synchronization signal (primary synchronization signal, PSS)/secondary synchronization signal (secondary synchronization signal, SSS) and a physical broadcast channel block (physical broadcast channel block, PBCH).

Step 2: Terminal processing, and protocol stack processing/time-consuming for queuing. A specific delay spacing needs to be reserved between SSB processing and SIB 1 processing.

Step 3: The terminal needs to first search for the SIB 1 and parse information about the SIB 1, to obtain the search space of the SIB 19 carrying an ephemeris.

Assuming that the PSS/SSS and the PBCH are parsed in a 1st periodicity, the SIB 1 is parsed in a 2nd periodicity, and the SIB 19 is parsed in a 3rd periodicity, 640*3=1920 ms=1.92s is required. It can be learned that it takes 1.92s before the terminal sends the random access preamble, and the delay is very long. A probability that the terminal faces beam switching increases. As a result, an initial access delay of the terminal may be unacceptable.

For the foregoing problem, this application provides a communication method and a communication apparatus, to unbind obtaining of the search space of the SIB 19 from data parsing of the SIB 1, thereby reducing the access delay of the terminal.

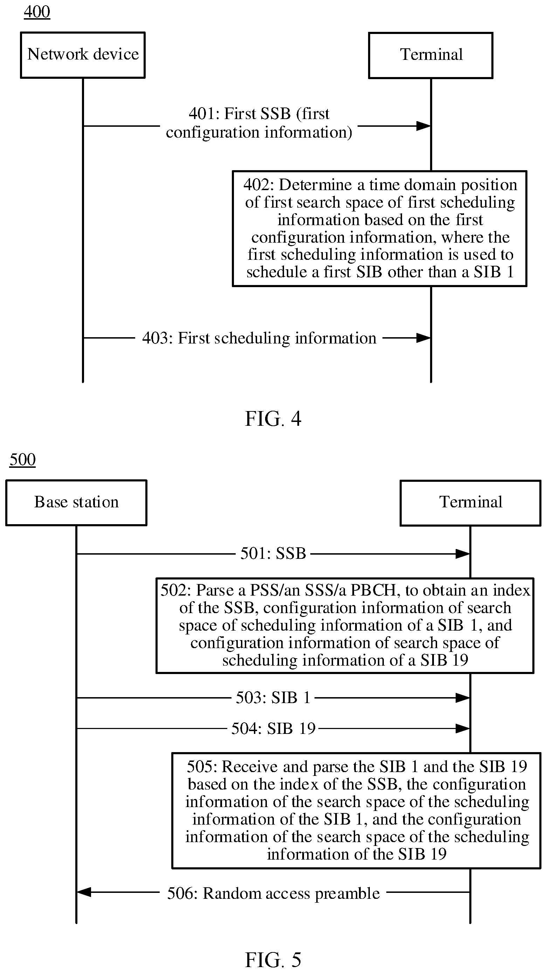

FIG. 4 is a schematic flowchart of a communication method 400 according to this application.

The method 400 may be performed by a terminal and a network device, or may be performed by modules or units in the terminal and the network device. This is not limited. For ease of description, these components are collectively referred to as the terminal and the network device in the following. The method 400 may include at least a part of the following content.

Step 401: The network device sends a first SSB to the terminal.

Correspondingly, the terminal receives the first SSB from the network device.

The first SSB includes first configuration information, the first configuration information is used to determine a time domain position of first search space of first scheduling information, and the first scheduling information is used to schedule a first SIB. The first SIB is an information block other than a SIB 1.

Optionally, the first SIB is used to carry information related to random access of the terminal.

For example, the first SIB is a SIB 19, and the SIB 19 is used to carry information related to a satellite ephemeris. The information related to the satellite ephemeris may be used for random access of the terminal.

Optionally, the information related to the satellite ephemeris includes at least one of the following information: the ephemeris, a timing advance related parameter, valid time, or reference time.

Optionally, the first configuration information may be configuration information of a time domain position of second search space of second scheduling information, and the second scheduling information is used to schedule the SIB 1 corresponding to the first SSB. In other words, the configuration information of the time domain position of the second search space of the second scheduling information may be used to determine the time domain position of the search space of the first scheduling information, and may also be used to determine the time domain position of the search space of the second scheduling information. In other words, the first configuration information reuses the configuration information of the time domain position of the second search space of the second scheduling information.

In this case, a first table is preconfigured in the terminal and the network device, and the first table includes both a parameter used to determine the time domain position of the first search space and a parameter used to determine the time domain position of the second search space. In this way, after receiving the first configuration information, the terminal may obtain, from the first table based on the first configuration information, the parameter used to determine the time domain position of the first search space and the parameter used to determine the time domain position of the second search space. Further, the terminal may determine the time domain position of the first search space and the time domain position of the second search space based on the obtained parameters.

Optionally, the first configuration information is configuration information of the time domain position of the first search space. In other words, based on an existing SSB, new configuration information may be added to the SSB, to configure the time domain position of the first search space.

In this case, a second table and a third table may be preconfigured in the terminal and the network device. The second table includes a parameter used to determine the time domain position of the second search space, and the third table includes a parameter used to determine the time domain position of the first search space. In this way, after the terminal receives the first SSB, the terminal may obtain, from the second table based on configuration information that is of the time domain position of the second search space and that is carried in the first SSB, the parameter used to determine the time domain position of the second search space, and obtain, from the third table based on the first configuration information carried in the first SSB, the parameter used to determine the time domain position of the first search space. Further, the terminal may determine the time domain position of the first search space and the time domain position of the second search space based on the obtained parameters.

It should be noted that the "scheduling information" in this application may alternatively be replaced with "a physical downlink control channel (physical downlink control channel, PDCCH)", "downlink control information (downlink control information, DCI)", or the like.

Step 402: The terminal determines the time domain position of the first search space based on the first configuration information.

In a possible implementation, step 402 includes: The terminal obtains, based on the first configuration information, the parameter used to determine the time domain position of the first search space; and the terminal determines the time domain position of the first search space based on the parameter used to determine the time domain position of the first search space.

There are a plurality of forms of the parameter used to determine the time domain position of the first search space. Details are as follows:

Form 1: The parameter used to determine the time domain position of the first search space includes a first offset and a first spacing.

The first offset is an offset of a CORESET of the first SIB relative to a start position of a system frame in which the first SSB is located, and the first spacing is a spacing between time domain positions of CORESETs of first SIBs corresponding to two adjacent SSBs.

In this case, step 402 specifically includes: The terminal obtains the first offset and the first spacing based on the first configuration information; and the terminal determines the time domain position of the first search space based on the first offset and the first spacing.

When the first configuration information is the configuration information of the time domain position of the second search space, the terminal may obtain the first offset and the first spacing from the first table based on the first configuration information. When the first configuration information is the configuration information of the time domain position of the first search space, the terminal may obtain the first offset and the first spacing from the third table based on the first configuration information.

There are many implementations in which the terminal determines the time domain position of the first search space based on the first offset and the first spacing. Details are as follows:

Manner 1: The first SSB further includes an index of the first SSB, information used to determine a subcarrier spacing, and a number of the system frame in which the first SSB is located. The terminal may determine the time domain position of the first search space based on the first offset, the first spacing, the index of the first SSB, the information used to determine the subcarrier spacing, and the number of the system frame in which the first SSB is located.

A start slot of the time domain position of the first search space is a first slot of a first system frame.

A number $n_1$ of the first slot satisfies: $n_1 = (O_1 * 2^\mu + \lfloor (i \bmod \overline{L_{\max}}) * M_1 \rfloor) \bmod N_{slot}^{frame,\mu}$ .

A number $SFN_1$ of the first system frame satisfies:

If

$$\lfloor (O_1 * 2^\mu + \lfloor (i \bmod \overline{L_{\max}}) * M_1 \rfloor) / N_{slot}^{frame,\mu} \rfloor = 1, \quad SFN_1 = SFN_{SSB\_i} + 1;$$

or

if

$$\left\lfloor (O_1 * 2^\mu + \left\lfloor (i \bmod \overline{L_{\max}}) * M_1 \right\rfloor) / N_{slot}^{frame,\mu} \right\rfloor = 0, \quad SFN_1 = SFN_{SSB\_i},$$

where

$O_1$ is the first offset, $\mu$ is the information used to determine the subcarrier spacing, $2^\mu$ is a quantity of slots in 1 millisecond, i is the index of the first SSB, $\overline{L_{\max}}$ is a maximum quantity of candidate SSBs in a half-frame, $M_1$ is the first spacing, $N_{slot}^{frame,\mu}$ is a quantity of slots in one system frame, $SFN_{SSB\_i}$ is the number of the system frame in which the first SSB is located, and $\lfloor \rfloor$ represents rounding down to the nearest integer.

$\overline{L_{\max}}$ may be determined based on different SSB modes (patterns) defined in a protocol. For example, when the SSB mode is a case C, the SCS=30 kHz, and $\overline{L_{\max}}$ = 8. For another example, when the SSB mode is a case D, the SCS=120 kHz, and $\overline{L_{\max}}$ = 64.

Manner 2: The first SSB further includes an index of the first SSB, information used to determine a subcarrier spacing, and a number of the system frame in which the first SSB is located. The terminal may determine the time domain position of the first search space based on the first offset, the first spacing, the index of the first SSB, the information used to determine the subcarrier spacing, and the number of the system frame in which the first SSB is located.

A start slot of the time domain position of the first search space is a first slot of a first system frame.

A number $n_1$ of the first slot satisfies: $n_1 = (O_1 * 2^\mu + \left\lfloor i * M_1 \right\rfloor) \bmod N_{slot}^{frame,\mu}$ .

A number $SFN_1$ of the first system frame satisfies:

If

$$\left\lfloor (O_1 * 2^\mu + \left\lfloor i * M_1 \right\rfloor) / N_{slot}^{frame,\mu} \right\rfloor = 1, \quad SFN_1 = SFN_{SSB\_i} + 1;$$

or

if

$$\left\lfloor (O_1 * 2^\mu + \left\lfloor i * M_1 \right\rfloor) / N_{slot}^{frame,\mu} \right\rfloor = 0, \quad SFN_1 = SFN_{SSB\_i},$$

where

$O_1$ is the first offset, $\mu$ is the information used to determine the subcarrier spacing, $2^\mu$ is a quantity of slots in 1 millisecond, $i$ is the index of the first SSB, $M_1$ is the first spacing, $N_{slot}^{frame,\mu}$ is a quantity of slots in one system frame, $SFN_{SSB\_i}$ is the number of the system frame in which the first SSB is located, and $\lfloor \rfloor$ represents rounding down to the nearest integer.

Form 2: The parameter used to determine the time domain position of the first search space includes a third offset.

The third offset is an offset between a start slot of the first search space and a start slot of the second search space.

In this case, step 402 specifically includes: The terminal obtains the third offset based on the first configuration information; and the terminal determines the time domain position of the first search space based on the third offset.

A start slot of the time domain position of the first search space is a first slot of a first system frame.

A number $n_1$ of the first slot satisfies: $n_1 = n_0 + Offset_1$.

A number $SFN_1$ of the first system frame satisfies:

If

$$\left\lfloor n_1 / N_{slot}^{frame,\mu} \right\rfloor = 1, \quad SFN_1 = SFN_{SSB\_i} + 1;$$

or

if

$$\left\lfloor n_1 / N_{slot}^{frame,\mu} \right\rfloor = 0, \quad SFN_1 = SFN_{SSB\_i},$$

where

$n_0$ is a number of the start slot of the second search space, $Offset_1$ is the third offset, $N_{slot}^{frame,\mu}$ is a quantity of slots in one system frame, $SFN_{SSB\_i}$ is a number of a system frame in which the first SSB is located, and $\lfloor \ \rfloor$ represents rounding down to the nearest integer.

In addition, corresponding to a manner of determining the time domain position of the first search space, in this application, a manner of determining the time domain position of the second search space is as follows:

Manner 1: A start slot of the time domain position of the second search space is a second slot of a second system frame.

A number $n_0$ of the second slot satisfies:

$$n_0 = (O * 2^\mu + \left\lfloor (i \bmod \overline{L_{max}}) * M \right\rfloor) \bmod N_{slot}^{frame,\mu}.$$

A number $SFN_0$ of the second system frame satisfies:

If

$$\left\lfloor (O * 2^\mu + \left\lfloor (i \bmod \overline{L_{max}}) * M \right\rfloor) / N_{slot}^{frame,\mu} \right\rfloor = 1, \quad SFN_0 = SFN_{SSB\_i} + 1;$$

or

if

$$\left\lfloor (O * 2^\mu + \left\lfloor (i \bmod \overline{L_{max}}) * M \right\rfloor) / N_{slot}^{frame,\mu} \right\rfloor = 0, \quad SFN_0 = SFN_{SSB\_i},$$

where

$O$ is a second offset, the second offset is an offset of a CORESET 0 corresponding to the first SSB relative to a start position of the system frame in which the first SSB is located, $\mu$ is information used to determine a subcarrier spacing, $2^\mu$ is a quantity of slots in 1 millisecond, i is an index of the first SSB, $\overline{L_{max}}$ is a maximum quantity of candidate SSBs in a half-frame, $M$ is a second spacing, the second spacing is a spacing between time domain positions of CORESETs 0 corresponding to two adjacent SSBs, $N_{slot}^{frame,\mu}$ is a quantity of slots in one system frame, and $\lfloor \ \rfloor$ represents rounding down to the nearest integer. The CORESET 0 is a CORESET corresponding to the SIB 1.

Manner 2: A start slot of the time domain position of the second search space is a second slot of a second system frame.

A number $n_0$ of the second slot satisfies:

$$n_0 = (O * 2^\mu + \left\lfloor i * M \right\rfloor) \bmod N_{slot}^{frame,\mu}.$$

A number $SFN_0$ of the second system frame satisfies:

If

$$\left\lfloor (O*2^{\mu} + \left\lfloor i*M \right\rfloor)/N_{slot}^{frame,\mu} \right\rfloor = 1, \quad SFN_0 = SFN_{SSB\_i} + 1;$$

or

if

$$\left\lfloor (O*2^{\mu} + \left\lfloor i*M \right\rfloor)/N_{slot}^{frame,\mu} \right\rfloor = 0, \quad SFN_0 = SFN_{SSB\_i},$$

where

$O$ is a second offset, the second offset is an offset of a CORESET 0 corresponding to the first SSB relative to a start position of the system frame in which the first SSB is located, $\mu$ is information used to determine a subcarrier spacing, $2^{\mu}$ is a quantity of slots in 1 millisecond, i is an index of the first SSB, $M$ is a second spacing, the second spacing is a spacing between time domain positions of CORESETs 0 corresponding to two adjacent SSBs, $N_{slot}^{frame,\mu}$ is a quantity of slots in one system frame, and ⌊⌋ represents rounding down to the nearest integer. The CORESET 0 is a CORESET corresponding to the SIB 1.

Optionally, when a restriction is used to schedule the first SIB and the SIB 1 to be sent in adjacent slots, $O_1 = O \pm 1/2^{\mu}$ or $Offset_1 = \pm 1$. For example, when it is restricted that the first SIB and the SIB 1 are sent in adjacent slots, and the first SIB is sent after the SIB 1, $O_1 = O + 1/2^{\mu}$ or $Offset_1 = +1$. For another example, when it is restricted that the first SIB and the SIB 1 are sent in adjacent slots, and the first SIB is sent before the SIB 1, $O_1 = O -1/2^{\mu}$ or $Offset_1 = -1$.

When the first SIB and the SIB 1 are sent in adjacent slots, a probability that the terminal faces beam switching is low. This helps improve demodulation performance.

In addition, it should be noted that, if a spacing between a time domain position of scheduling information of the first SIB and a time domain position of scheduling information of the SIB 1 is a fixed value, the network device may not need to perform additional configuration, and the terminal may determine the time domain position of the scheduling information of the first SIB based on the time domain position of the scheduling information of the SIB 1 and the fixed spacing.

In another possible implementation, the time domain position of the first search space is the same as the time domain position of the second search space. The first configuration information is the configuration information of the time domain position of the second search space. The time domain position of the second search space is obtained based on the first configuration information, that is, the time domain position of the first search space is obtained. In other words, a process of determining the time domain position of the second search space based on the first configuration information is a process of determining the time domain position of the first search space based on the first configuration information. In this case, the network device does not need to provide additional configuration information for the terminal. For a manner of determining the time domain position of the first search space (or the time domain position of the second search space), refer to the manner 1 and the manner 2 in the foregoing form 2. Details are not described herein again.

In addition, because the time domain position of the first search space is the same as the time domain position of the second search space, the first scheduling information and the second scheduling information need to be distinguished.

Optionally, the first scheduling information and the second scheduling information may be scrambled by using different scrambling sequences. Specifically, the network device may scramble the first scheduling information by using a first scrambling sequence, and scramble the second scheduling information by using a second scrambling sequence. The first scrambling sequence is different from the second scrambling sequence. The terminal may detect, at the time domain position of the first search space (that is, the time domain position of the second search space) by using the first scrambling sequence, the first scheduling information scrambled by using the first scrambling sequence, and detect, at the time domain position of the first search space (that is, the time domain position of the second search space) by using the second scrambling sequence, the second scheduling information scrambled by using the second scrambling sequence.

Optionally, the first scrambling sequence may be an SI-RNTI, and the second scrambling sequence may be an NTN-RNTI used in an NTN scenario.

Certainly, in the foregoing another embodiment, the first scheduling information and the second scheduling information may also be scrambled by using different scrambling sequences.

Step 403: The network device sends the first scheduling information at the time domain position of the first search space.

Correspondingly, the terminal detects the first scheduling information at the time domain position of the first search space.

When the first scheduling information is scrambled by using the first scrambling sequence, and the second scheduling information is scrambled by using the second scrambling sequence, the terminal detects, at the time domain position of the first search space by using the first scrambling sequence, the first scheduling information scrambled by using the first scrambling sequence.

It should be noted that a manner in which the network device determines the time domain position of the first search space and the first configuration information is not limited in this application. For example, the network device may first select the first configuration information used to determine the time domain position of the first search space, and further determine the time domain position of the first search space based on the selected first configuration information. For another example, the network device may first determine the time domain position of the first search space, and then determine the first configuration information based on the determined time domain position.

It should be further noted that when the network device first selects the first configuration information, a manner in which the network device determines the first search space based on the first configuration information is similar to that used by the terminal. Details are not described again.

In this way, based on the method 400, the time domain position of search space of the scheduling information of the first SIB may be determined based on the first configuration information carried in the first SSB, and the search space of the scheduling information of the first SIB may be determined to be unbound from the SIB 1. In other words, the scheduling information of the first SIB and the first SIB can be monitored and received without a need to obtain the SIB 1. This helps reduce an access delay of the terminal.

The following describes the communication method in this application with reference to a specific scenario.

FIG. 5 shows an example of a communication method according to this application.

The method shown in FIG. 5 is described by using an example in which a network device is a base station and a first SIB is a SIB 19. $O_{SIB19}$, $M_{SIB19}$, and $Offset_{SIB19}$ in FIG. 5 may correspond to the foregoing $O_1$, $M_1$, and $Offset_1$.

Step 501: The base station sends an SSB to a terminal.

Correspondingly, the terminal receives the SSB from the base station.

Step 502: The terminal parses a PSS, an SSS, and a PBCH in the SSB, to obtain an index of the SSB, configuration information of search space of scheduling information of a SIB 1, and configuration information of search space of scheduling information of the SIB 19.

A parameter used to determine the search space of the scheduling information of the SIB 1 may be obtained based on the configuration information of the search space of the scheduling information of the SIB 1. A parameter used to determine the search space of the scheduling information of the SIB 19 may be obtained based on the configuration information of the search space of the scheduling information of the SIB 19.

Step 503: The base station sends the SIB 1 to the terminal.

Specifically, the base station sends the scheduling information of the SIB 1 in the search space corresponding to the configuration information of the search space of the scheduling information of the SIB 1, and then sends the SIB 1 based on the scheduling information of the SIB 1.

Step 504: The base station sends the SIB 19 to the terminal.

Specifically, the base station sends the scheduling information of the SIB 19 in the search space corresponding to the configuration information of the search space of the scheduling information of the SIB 19, and then sends the SIB 19 based on the scheduling information of the SIB 19.

It should be noted that the base station may first select the configuration information of the search space of the scheduling information of the SIB 1 or the SIB 19, and further determine, based on the selected configuration information, the search space for sending the scheduling information of the SIB 1 or the SIB 19; or the base station may first determine the search space for sending the scheduling information of the SIB 1 or the SIB 19, and then determine, based on the determined search space, the configuration information of the search space of the scheduling information of the SIB 1 or the SIB 19. This is not limited.

Step 505: The terminal receives and parses the SIB 1 and the SIB 19 based on the index of the SSB, the configuration information of the search space of the scheduling information of the SIB 1, and the configuration information of the search space of the scheduling information of the SIB 19, to obtain system information of a cell and ephemeris information.

Specifically, the terminal determines the search space of the scheduling information of the SIB 1 based on the index of the SSB and the configuration information of the search space of the scheduling information of the SIB 1. The terminal receives the scheduling information of the SIB 1 in the search space of the scheduling information of the SIB 1, and receives and parses the SIB 1 based on the scheduling information of the SIB 1, to obtain the system information of the cell. The search space of the scheduling information of the SIB 19 is determined based on the index of the SSB and the configuration information of the search space of the scheduling information of the SIB 19. The terminal receives the scheduling information of the SIB 19 in the search space of the scheduling information of the SIB 19, and receives and parses the SIB 19 based on the scheduling information of the SIB 19, to obtain the ephemeris information.

Step 506: The terminal sends, based on the system information of the cell and the ephemeris information, a random access preamble on an uplink resource corresponding to the index of the SSB.

The following describes, with reference to a specific scenario, the configuration information of the search space of the scheduling information of the SIB 1, the configuration information of the search space of the scheduling information of the SIB 19, a manner in which the terminal determines the search space of the scheduling information of the SIB 1, and a manner in which the terminal determines the search space of the scheduling information of the SIB 19.

Scenario 1

In the scenario 1, the base station configures $O_{SIB19}$ and $M_{SIB19}$ of the search space of the scheduling information of the SIB 19 for the terminal. $O_{SIB19}$ is an offset of a CORESET of the SIB 19 relative to a start position of a system frame in which the SSB is located, and $M_{SIB19}$ is a spacing between time domain positions of CORESETs of SIBs 19 corresponding to two adjacent SSBs.

Manner 1: The configuration information of the search space of the scheduling information of the SIB 19 reuses the configuration information of the search space of the scheduling information of the SIB 1.

To be specific, the configuration information of the search space of the scheduling information of the SIB 1 may be used to obtain the parameter of the search space of the scheduling information of the SIB 1, and may also be used to obtain the parameter of the search space of the scheduling information of the SIB 19.

For example, four bits that are in a master information block (master information block, MIB) of the SSB and that indicate the search space of the scheduling information of the SIB 1, that is, search space 0 (SearchSpaceZero) in PDCCH configuration of the SIB 1 (PDCCH-Config SIB1), may be reused.

Because a manner of reusing the configuration information of the search space of the scheduling information of the SIB 1 is used, there is a specific relative relationship between the parameter of the search space of the scheduling information of the SIB 19 and the parameter of the search space of the scheduling information of the SIB 1.

In a possible implementation, the parameter of the search space of the scheduling information of the SIB 1 and the parameter of the search space of the scheduling information of the SIB 19 may belong to a same parameter table. For example, the parameter of the search space of the scheduling information of the SIB 19 is added to a parameter table of the search space of the scheduling information of the SIB 1. In this way, when the terminal obtains the configuration information of the search space of the scheduling information of the SIB 1, both the parameter of the search space of the scheduling information of the SIB 1 and the parameter of the search space of the scheduling information of the SIB 19 may be obtained based on the configuration information.

For example, Table 1 shows a form of the parameter table of the search space of the scheduling information of the SIB 1 and the search space of the scheduling information of the SIB 19 (for example, parameters for PDCCH monitoring occasions for Type0-PDCCH CSS set and Type0C-PDCCH CSS set-SS/PBCH block and CORESET multiplexing pattern 1 and FR1 in NTN (parameters for PDCCH monitoring occasions for Type0-PDCCH CSS set and Type0C-PDCCH CSS set-SS/PBCH block and CORESET multiplexing pattern 1 and FR1 in NTN), where CSS is short for common search space (common search space), and FR1 is short for a frequency range 1 (frequency range 1)). Table 1 may be formed by adding two columns of $O_{SIB19}$ and $M_{SIB19}$ to the original parameter of the search space of the scheduling information of the SIB 1. Certainly, the parameter table may alternatively be in another form. For example, the parameter table is a combination of any one or more rows in Table 1 and any one or more columns in Table 1. This is not limited.

Table 1

| Index (index) | O | Quantity of search space sets in each slot | M | Index of a 1st symbol | $O_{SIB19}$ | $M_{SIB19}$ |
|---|---|---|---|---|---|---|
| 0 | 4 | 1 | 2 | 0 | 4.5 | 2 |
| 1 | 5 | 1 | 2 | 0 | 5.5 | 2 |
| 2 | 6 | 1 | 2 | 0 | 6.5 | 2 |
| 3 | 7 | 1 | 2 | 0 | 7.5 | 2 |
| 4 | 8 | 1 | 2 | 0 | 8.5 | 2 |
| 5 | 9 | 1 | 2 | 0 | 9.5 | 2 |
| 6 | 10 | 1 | 2 | 0 | 10.5 | 2 |

The index in Table 1 corresponds to the configuration information of the search space of the scheduling information of the SIB 1, and different configuration information corresponds to different indexes, in other words, corresponds to different parameters of the search space. For example, the configuration information of the search space of the scheduling information of the SIB 1 is SearchSpaceZero in PDCCH-Config SIB 1. The terminal may determine the index in Table 1 based on a value of SearchSpaceZero, and then determine a value of each parameter based on the index. For example, SearchSpaceZero in DCCH-Config SIB 1 is 0000, which corresponds to the index 0 in Table 1. In this case, the parameter $O$ of the search space of the scheduling information of the SIB 1 is equal to 4, the parameter $M$ of the search space of the scheduling information of the SIB 1 is equal to 2, the parameter $O_{SIB19}$ of the search space of the scheduling information of the SIB 19 is equal to 4.5, and the parameter $M_{SIB19}$ of the search space of the scheduling information of the SIB 19 is equal to 2. For another example, SearchSpaceZero in DCCH-Config SIB1 is 0010, which corresponds to the index 2 in Table 1. In this case, the parameter $O$ of the search space of the scheduling information of the SIB 1 is equal to 6, the parameter $M$ of the search space of the scheduling information of the SIB 1 is equal to 2, the parameter $O_{SIB19}$ of the search space of the scheduling information of the SIB 19 is equal to 6.5, and the parameter $M_{SIB19}$ of the search space of the scheduling information of the SIB 19 is equal to 2.

It should be noted that values of the parameters in Table 1 are merely examples, and may alternatively be other proper values. This is not limited.

In this case, the terminal may obtain $O$ and $M$ of the search space of the scheduling information of the SIB 1 and $O_{SIB19}$ and $M_{SIB19}$ of the search space of the scheduling information of the SIB 19 from the parameter table of the search space of the scheduling information of the SIB 1 and the search space of the scheduling information of the SIB 19 based on the configuration information of the search space of the scheduling information of the SIB 1.

Manner 2: The configuration information of the search space of the scheduling information of the SIB 19 is newly added to the SSB.

Specifically, several bits are newly added to a MIB, or several bits or reserved bits in the PBCH are used, and the several bits indicate the configuration information of the search space of the scheduling information of the SIB 19. For example, PDCCH configuration of the SIB 19 (PDCCH-Config SIB19) or search space SIB 19 (SearchSpaceSIB19) is newly added to the MIB as the configuration information of the search space of the scheduling information of the SIB 19.

For example, Table 2 shows a form of a parameter table of the search space of the scheduling information of the SIB 19 (for example, parameters for PDCCH monitoring occasions for Type0C-PDCCH CSS set-SS/PBCH block and CORESET multiplexing pattern 1 and FR 1 in NTN (parameters for PDCCH monitoring occasions for Type0C-PDCCH CSS set-SS/PBCH block and CORESET multiplexing pattern 1 and FR 1 in NTN)). Certainly, the parameter table may alternatively be in another form. For example, the parameter table is a combination of any one or more rows in Table 2 and any one or more columns in Table 2. This is not limited.

Table 2

| Index (index) | $O_{SIB19}$ | Quantity of search space sets in each slot | $M_{SIB19}$ | Index of a 1st symbol |
|---|---|---|---|---|
| 0 | 4.5 | 1 | 2 | 0 |
| 1 | 5.5 | 1 | 2 | 0 |
| 2 | 6.5 | 1 | 2 | 0 |
| 3 | 7.5 | 1 | 2 | 0 |
| 4 | 8.5 | 1 | 2 | 0 |
| 5 | 9.5 | 1 | 2 | 0 |
| 6 | 10.5 | 1 | 2 | 0 |

The index in Table 2 corresponds to the configuration information of the search space of the scheduling information of the SIB 19, and different configuration information corresponds to different indexes, in other words, corresponds to different parameters of the search space. For example, the configuration information of the search space of the scheduling information of the SIB 19 is SearchSpaceZeroSIB19. The terminal may determine the index in Table 3 based on a value of SearchSpaceZeroSIB19, and then determine a value of each parameter based on the index. For example, SearchSpaceZeroSIB19 is 0000, which corresponds to the index 0 in Table 3. In this case, the parameter $O_{SIB19}$ of the search space of the scheduling information of the SIB 19 is equal to 4.5, and the parameter $M_{SIB19}$ of the search space of the scheduling information of the SIB 19 is equal to 2. For another example, SearchSpaceZeroSIB19 is 0010, which corresponds to the index 2 in Table 3. In this case, the parameter $O_{SIB19}$ of the search space of the scheduling information of the SIB 19 is equal to 6.5, and the parameter $M_{SIB19}$ of the search space of the scheduling information of the SIB 19 is equal to 2.

It should be noted that values of the parameters in Table 2 are merely examples, and may alternatively be other proper values. This is not limited.

In this case, the terminal may obtain $O$ and $M$ of the search space of the scheduling information of the SIB 1 from a parameter table of the search space of the scheduling information of the SIB 1 based on the configuration information of the search space of the scheduling information of the SIB 1, and obtain $O_{SIB19}$ and $M_{SIB19}$ of the search space of the scheduling information of the SIB 19 from the parameter table of the search space of the scheduling information of the SIB 19 based on the configuration information of the search space of the scheduling information of the SIB 19.

Further, the terminal determines a number $SFN_0$ of a system frame of the search space of the scheduling information of the SIB 1 and a number $n_0$ of a start slot of the search space of the scheduling information of the SIB 1 based on the obtained $O$ and $M$ by using the following formula:

$$n_0 = (O * 2^\mu + \left\lfloor (i \bmod \overline{L_{\max}}) * M \right\rfloor) \bmod N_{slot}^{frame,\mu} ;$$

and

if

$$\left\lfloor (O * 2^\mu + \left\lfloor (i \bmod \overline{L_{\max}}) * M \right\rfloor) / N_{slot}^{frame,\mu} \right\rfloor = 1, \quad SFN_0 = SFN_{SSB\_i} + 1;$$

or

if

$$\left\lfloor (O * 2^\mu + \left\lfloor (i \bmod \overline{L_{\max}}) * M \right\rfloor) / N_{slot}^{frame,\mu} \right\rfloor = 0, \quad SFN_0 = SFN_{SSB\_i} ,$$

where

$O$ is an offset of a CORESET 0 corresponding to the SSB relative to a start position of the system frame in which the SSB is located, and is in a unit of a slot; $\mu$ is information used to determine a subcarrier spacing; $2^\mu$ is a quantity of slots in 1 millisecond; i is the index of the SSB; $\overline{L_{\max}}$ is a maximum quantity of candidate SSBs in a half-frame; $M$ is a spacing between time domain positions of CORESETs 0 corresponding to two adjacent SSBs, and is in a unit of a slot; $N_{slot}^{frame,\mu}$ is a quantity of slots in one system frame, $SFN_{SSB\_i}$ is a number of the system frame in which the SSB is located, and ⌊ ⌋ represents rounding down to the nearest integer. When the SCS=30 kHz, $\mu$ =1, $2^\mu$ =1, $L_{\max}$ is 8, and $N_{slot}^{frame,\mu} = 20$ .

Further, the terminal determines a system frame $SFN_1$ and a start slot $n_1$ of the search space of the scheduling information of the SIB 19 based on the obtained $O_{SIB19}$ and $M_{SIB19}$ by using the following formula:

$$n_1 = (O_{SIB19} * 2^\mu + \left\lfloor (i \bmod \overline{L_{\max}}) * M_{SIB19} \right\rfloor) \bmod N_{slot}^{frame,\mu} ;$$

and

if

$$\left\lfloor (O_{SIB19} * 2^\mu + \left\lfloor (i \bmod \overline{L_{\max}}) * M_{SIB19} \right\rfloor) / N_{slot}^{frame,\mu} \right\rfloor = 1, \quad SFN_1 = SFN_{SSB\_i} + 1;$$

or

if

$$\left\lfloor (O_{SIB19} * 2^\mu + \left\lfloor (i \bmod \overline{L_{\max}}) * M_{SIB19} \right\rfloor) / N_{slot}^{frame,\mu} \right\rfloor = 0, \quad SFN_1 = SFN_{SSB\_i} ,$$

where

$O_{SIB19}$ is an offset of a CORESET of the SIB 19 relative to the start position of the system frame in which the SSB is located, and is in a unit of a slot; $\mu$ is the information used to determine the subcarrier spacing; $2^\mu$ is the quantity of slots in 1 millisecond; i is the index of the SSB; $\overline{L_{max}}$ is the maximum quantity of candidate SSBs in the half-frame; $M_{SIB19}$ is a spacing between time domain positions of CORESETs of SIBs 19 corresponding to two adjacent SSBs, and is in a unit of a slot; $N_{slot}^{frame,\mu}$ is the quantity of slots in one system frame; $SFN_{SSB\_i}$ is the number of the system frame in which the SSB is located; and $\lfloor \rfloor$ represents rounding down to the nearest integer.

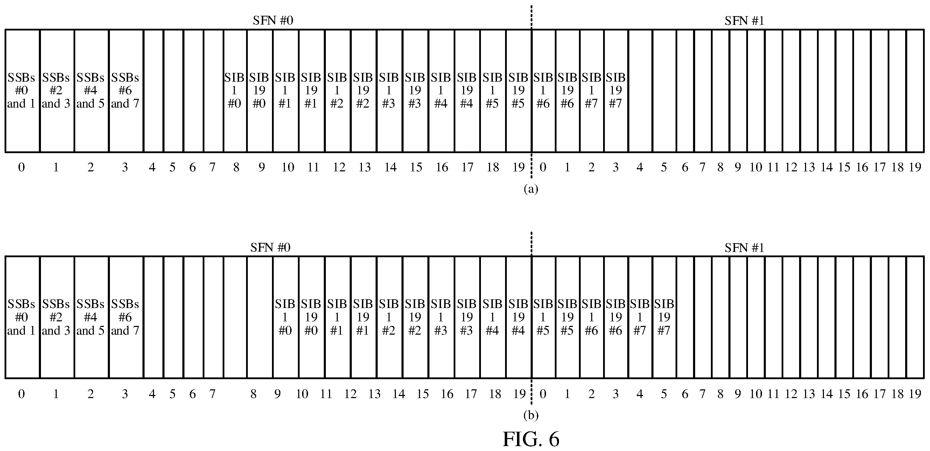

For example, the index i of the SSB is equal to 0, the configuration information of the search space of the scheduling information of the SIB 1 corresponds to the index 0 in Table 1, and the SCS=30 kHz. $\mu$ =1, $2^\mu$=2, $\overline{L_{max}}$ =8, $N_{slot}^{frame,\mu}=20$, O=4, M=2, $O_{SIB19}$ =4.5, and $M_{SIB19}$ =2. In this case, $n_0$ =4*2+0*2=8, and $n_1$ =4.5*2+0*2=9. When a value of i changes, a time domain mode (pattern) of the SSB, the SIB 1, and the SIB 19 may be shown in (a) in FIG. 6.

For example, the index i of the SSB is equal to 1, the configuration information of the search space of the scheduling information of the SIB 1 corresponds to the index 0 in Table 1, and the SCS=30 kHz. $\mu$=1, $2^\mu$=2, $\overline{L_{max}}$ =8, $N_{slot}^{frame,\mu}=20$, O=4, M =2, $O_{SIB19}$ =4.5, and $M_{SIB19}$ =2. In this case, $n_0$ =4*2+1*2=10, and $n_1$ =4.5*2+1*2=11. When a value of i changes, a time domain mode of the SSB, the SIB 1, and the SIB 19 may be shown in (b) in FIG. 6.

Scenario 2

In the scenario 2, the base station configures $Offset_{SIB19}$ of the search space of the scheduling information of the SIB 19 for the terminal. $Offset_{SIB19}$ is an offset between a start slot of the search space of the scheduling information of the SIB 19 and a start slot of the search space of the scheduling information of the SIB 1.

Manner 1: The configuration information of the search space of the scheduling information of the SIB 19 reuses the configuration information of the search space of the scheduling information of the SIB 1.

To be specific, the configuration information of the search space of the scheduling information of the SIB 1 may be used to obtain the parameter of the search space of the scheduling information of the SIB 1, and may also be used to obtain the parameter of the search space of the scheduling information of the SIB 19.

For example, four bits that are in a master information block (master information block, MIB) of the SSB and that indicate the search space of the scheduling information of the SIB 1, that is, SearchSpaceZero in PDCCH-Config SIB1, may be reused.

Because a manner of reusing the configuration information of the search space of the scheduling information of the SIB 1 is used, there is a specific relative relationship between the parameter of the search space of the scheduling information of the SIB 19 and the parameter of the search space of the scheduling information of the SIB 1.

In a possible implementation, the parameter of the search space of the scheduling information of the SIB 1 and the parameter of the search space of the scheduling information of the SIB 19 may belong to a same parameter table. For example, the parameter of the search space of the scheduling information of the SIB 19 is added to a parameter table of the search space of the scheduling information of the SIB 1. In this way, when the terminal obtains the configuration information of the search space of the scheduling information of the SIB 1, both the parameter of the search space of the scheduling information of the SIB 1 and the parameter of the search space of the scheduling information of the SIB 19 may be obtained based on the configuration information.

For example, Table 3 shows another form of the parameter table of the search space of the scheduling information of the SIB 1 and the search space of the scheduling information of the SIB 19. Table 3 may be formed by adding a column of $Offset_1$ to the original parameter of the search space of the scheduling information of the SIB 1. Certainly, the parameter table may alternatively be in another form. For example, the parameter table is a combination of any one or more rows in Table 3 and any one or more columns in Table 3. This is not limited.

Table 3

| Index (index) | O | Quantity of search space sets in each slot | M | Index of a 1st symbol | $Offset_{SIB19}$ |
|---|---|---|---|---|---|
| 0 | 4 | 1 | 2 | 0 | 1 |
| 1 | 5 | 1 | 2 | 0 | 1 |
| 2 | 6 | 1 | 2 | 0 | 1 |
| 3 | 7 | 1 | 2 | 0 | 1 |
| 4 | 8 | 1 | 2 | 0 | 1 |

(continued)

| Index (index) | $O$ | Quantity of search space sets in each slot | $M$ | Index of a 1st symbol | $Offset_{SIB19}$ |
|---|---|---|---|---|---|
| 5 | 9 | 1 | 2 | 0 | 1 |
| 6 | 10 | 1 | 2 | 0 | 1 |

The index in Table 3 corresponds to the configuration information of the search space of the scheduling information of the SIB 1, and different configuration information corresponds to different indexes, in other words, corresponds to different parameters of the search space. For example, the configuration information of the search space of the scheduling information of the SIB 1 is SearchSpaceZero in PDCCH-Config SIB 1. The terminal may determine the index in Table 2 based on a value of SearchSpaceZero, and then determine a value of each parameter based on the index. For example, SearchSpaceZero in DCCH-Config SIB 1 is 0000, which corresponds to the index 0 in Table 2. In this case, the parameter $O$ of the search space of the scheduling information of the SIB 1 is equal to 4, the parameter $M$ of the search space of the scheduling information of the SIB 1 is equal to 2, and the parameter $Offset_{SIB19}$ of the search space of the scheduling information of the SIB 19 is equal to 1. For another example, SearchSpaceZero in DCCH-Config SIB1 is 0010, which corresponds to the index 2 in Table 2. In this case, the parameter $O$ of the search space of the scheduling information of the SIB 1 is equal to 6, the parameter $M$ of the search space of the scheduling information of the SIB 1 is equal to 2, and the parameter $Offset_{SIB19}$ of the search space of the scheduling information of the SIB 19 is equal to 1.

It should be noted that values of the parameters in Table 3 are merely examples, and may alternatively be other proper values. This is not limited.

In this case, the terminal may obtain $O$ and $M$ of the search space of the scheduling information of the SIB 1 and $Offset_{SIB19}$ of the search space of the scheduling information of the SIB 19 from the parameter table of the search space of the scheduling information of the SIB 1 and the search space of the scheduling information of the SIB 19 based on the configuration information of the search space of the scheduling information of the SIB 1.

Manner 2: The configuration information of the search space of the scheduling information of the SIB 19 is newly added to the SSB.

Specifically, several bits are newly added to a MIB, or several bits or reserved bits in the PBCH are used, and the several bits indicate the configuration information of the search space of the scheduling information of the SIB 19. For example, PDCCH-Config SIB19 or SearchSpaceSIB19 is newly added to the MIB as the configuration information of the search space of the scheduling information of the SIB 19.

For example, Table 4 shows another form of a parameter table of the search space of the scheduling information of the SIB 19. Certainly, the parameter table may alternatively be in another form. For example, the parameter table is a combination of any one or more rows in Table 4 and any one or more columns in Table 4. This is not limited.

Table 4

| Index (index) | $Offset_{SIB19}$ |
|---|---|
| 0 | 1 |
| 1 | 2 |
| 2 | Reserved |

The index in Table 4 corresponds to the configuration information of the search space of the scheduling information of the SIB 19, and different configuration information corresponds to different indexes, in other words, corresponds to different parameters of the search space. For example, the configuration information of the search space of the scheduling information of the SIB 19 is SearchSpaceZeroSIB19. The terminal may determine the index in Table 4 based on a value of SearchSpaceZeroSIB19, and then determine a value of each parameter based on the index. For example, SearchSpaceZeroSIB19 is 0000, which corresponds to the index 0 in Table 4. In this case, the parameter $Offset_{SIB19}$ of the search space of the scheduling information of the SIB 19 is equal to 1. For another example, SearchSpaceZeroSIB19 is 0001, which corresponds to the index 1 in Table 4. In this case, the parameter $Offset_{SIB19}$ of the search space of the scheduling information of the SIB 19 is equal to 2.

It should be noted that values of the parameters in Table 4 are merely examples, and may alternatively be other proper values. This is not limited.

In this case, the terminal may obtain $O$ and $M$ of the search space of the scheduling information of the SIB 1 from a parameter table of the search space of the scheduling information of the SIB 1 based on the configuration information of the search space of the scheduling information of the SIB 1, and obtain $Offset_{SIB19}$ of the search space of the scheduling information of the SIB 19 from the parameter table of the search space of the scheduling information of the SIB 19 based on the configuration information of the search space of the scheduling information of the SIB 19.

Further, the terminal determines a number $SFN_0$ of a system frame of the search space of the scheduling information of the SIB 1 and a number $n_0$ of a start slot of the search space of the scheduling information of the SIB 1 based on the obtained $O$ and $M$ by using the following formula:

$$n_0 = \left(O * 2^{\mu} + \left\lfloor (i \bmod \overline{L_{\max}}) * M \right\rfloor\right) \bmod N_{slot}^{frame,\mu} \, ;$$

and

if

$$\left\lfloor \left(O * 2^{\mu} + \left\lfloor (i \bmod \overline{L_{\max}}) * M \right\rfloor\right) / N_{slot}^{frame,\mu} \right\rfloor = 1, \quad SFN_0 = SFN_{SSB\_i} + 1;$$

or

if

$$\left\lfloor \left(O * 2^{\mu} + \left\lfloor (i \bmod \overline{L_{\max}}) * M \right\rfloor\right) / N_{slot}^{frame,\mu} \right\rfloor = 0, \quad SFN_0 = SFN_{SSB\_i} \, ,$$

where

$O$ is an offset of a CORESET 0 corresponding to the SSB relative to a start position of a system frame in which the SSB is located, and is in a unit of a slot; $\mu$ is information used to determine a subcarrier spacing; $2^{\mu}$ is a quantity of slots in 1 millisecond; $i$ is the index of the SSB; $\overline{L_{\max}}$ is a maximum quantity of candidate SSBs in a half-frame; $M$ is a spacing between time domain positions of CORESETs 0 corresponding to two adjacent SSBs, and is in a unit of a slot; $N_{slot}^{frame,\mu}$ is a quantity of slots in one system frame, $SFN_{SSB\_i}$ is a number of the system frame in which the SSB is located, and ⌊ ⌋ represents rounding down to the nearest integer.

Further, the terminal determines a system frame $SFN_1$ and a start slot $n_1$ of the search space of the scheduling information of the SIB 19 based on the obtained $Offset_{SIB19}$ by using the following formula:

$$n_1 = n_0 + Offset_{SIB19} \, ;$$

and

if

$$\left\lfloor n_1 / N_{slot}^{frame,\mu} \right\rfloor = 1, \quad SFN_1 = SFN_{SSB\_i} + 1;$$

or

if

$$\left\lfloor n_1 / N_{slot}^{frame,\mu} \right\rfloor = 0, \quad SFN_1 = SFN_{SSB\_i} \, ,$$

where

$n_0$ is the number of the start slot of the search space of the scheduling information of the SIB 1, $N_{slot}^{frame,\mu}$ is the quantity of slots in one system frame, $SFN_{SSB\_i}$ is the number of the system frame in which the SSB is located, and ⌊ ⌋ represents rounding down to the nearest integer.

For example, the index $i$ of the SSB is equal to 0, the configuration information of the search space of the scheduling information of the SIB 1 corresponds to the index 0 in Table 1, and the SCS=30 kHz. $\mu$=1, $2^\mu$=2, $\overline{L_{max}}$ =8, $N_{slot}^{frame,\mu}$ =20 , $O$=4, $M$ =2, and $Offset_{SIB19}$ =1. In this case, $n_0$ =4*2+0*2=8, and $n_1$ =8+1=9. When a value of $i$ changes, a time domain mode of the SSB, the SIB 1, and the SIB 19 may be shown in (a) in FIG. 6.

For example, the index i of the SSB is equal to 1, the configuration information of the search space of the scheduling information of the SIB 1 corresponds to the index 0 in Table 1, and the SCS=30 kHz. $\mu$=1, $2^\mu$=2, $\overline{L_{max}}$ =8, $N_{slot}^{frame,\mu}$ =20 , $O$=4, $M$ =2, and $Offset_{SIB19}$ =1. In this case, $n_0$ =4*2+1*2=10, and $n_1$ =10+1=11. When a value of $i$ changes, a time domain mode of the SSB, the SIB 1, and the SIB 19 may be shown in (b) in FIG. 6.

It should be noted that a manner in which the base station determines, based on the selected configuration information of the search space of the scheduling information of the SIB 1 or the SIB 19, the search space for sending the scheduling information of the SIB 1 or the SIB 19 is similar to that used by the terminal. Details are not described again.

Scenario 3

In the scenario 3, the search space of the scheduling information of the SIB 19 is the same as the search space of the scheduling information of the SIB 1, and the scheduling information of the SIB 19 and the scheduling information of the SIB 1 are distinguished by using different scrambling sequences. In this case, the base station does not need to additionally indicate $O_{SIB19}$, $M_{SIB19}$, or $Offset_{SIB19}$ to the terminal. Alternatively, it may be understood as that the configuration information of the search space of the scheduling information of the SIB 19 reuses the configuration information of the search space of the scheduling information of the SIB 1. The terminal uses different scrambling sequences to detect, in the search space determined based on the configuration information of the search space of the scheduling information of the SIB 1, scheduling information scrambled by using different scrambling sequences.

For example, both the scheduling information of the SIB 19 and the scheduling information of the SIB 1 use the search space (that is, Type0-PDCCH CSS) of the scheduling information of the SIB 1, the scheduling information Type0-PDCCH of the SIB 1 is scrambled by using an SI-RNTI, and the scheduling information Type0-PDCCH of the SIB 19 is scrambled by using a newly added NTN-RNTI.

The terminal may obtain $O$ and $M$ of the search space of the scheduling information of the SIB 1 from a parameter table of the search space of the scheduling information of the SIB 1 based on the configuration information of the search space of the scheduling information of the SIB 1.

For example, Table 5 shows a form of the parameter table of the search space of the scheduling information of the SIB 1. Certainly, the parameter table may alternatively be in another form. For example, the parameter table is a combination of any one or more rows in Table 5 and any one or more columns in Table 5. This is not limited.

Table 5

| Index (index) | $O$ | Quantity of search space sets in each slot | $M$ | Index of a 1st symbol |
|---|---|---|---|---|
| 0 | 4 | 1 | 2 | 0 |
| 1 | 5 | 1 | 2 | 0 |
| 2 | 6 | 1 | 2 | 0 |
| 3 | 7 | 1 | 2 | 0 |
| 4 | 8 | 1 | 2 | 0 |
| 5 | 9 | 1 | 2 | 0 |
| 6 | 10 | 1 | 2 | 0 |

It should be noted that values of the parameters in Table 5 are merely examples, and may alternatively be other proper values. This is not limited.

Further, the terminal determines a number $SFN_0$ of a system frame of the search space of the scheduling information of the SIB 1 and a number $n_0$ of a start slot of the search space of the scheduling information of the SIB 1 based on the obtained $O$ and $M$ by using the following formula:

$$n_0 = (O*2^\mu + \left\lfloor (i \bmod \overline{L_{max}})*M \right\rfloor) \bmod N_{slot}^{frame,\mu} ;$$

and

if

$$\left\lfloor (O*2^{\mu} + \left\lfloor (i \bmod \overline{L_{\max}})*M \right\rfloor) / N_{slot}^{frame,\mu} \right\rfloor = 1, \quad SFN_0 = SFN_{SSB\_i} + 1;$$

or

if

$$\left\lfloor (O*2^{\mu} + \left\lfloor (i \bmod \overline{L_{\max}})*M \right\rfloor) / N_{slot}^{frame,\mu} \right\rfloor = 0, \quad SFN_0 = SFN_{SSB\_i},$$

where

$O$ is an offset of a CORESET 0 corresponding to the SSB relative to a start position of a system frame in which the SSB is located, and is in a unit of a slot; $\mu$ is information used to determine a subcarrier spacing; $2^{\mu}$ is a quantity of slots in 1 millisecond; $i$ is the index of the SSB; $\overline{L_{\max}}$ is a maximum quantity of candidate SSBs in a half-frame; $M$ is a spacing between time domain positions of CORESETs 0 corresponding to two adjacent SSBs, and is in a unit of a slot; $N_{slot}^{frame,\mu}$ is a quantity of slots in one system frame, $SFN_{SSB\_i}$ is a number of the system frame in which the SSB is located, and $\lfloor \ \rfloor$ represents rounding down to the nearest integer.

Further, the terminal performs monitoring in two slots starting from the slot $n_0$ of $SFN_0$, uses the SI-RNTI to monitor and receive Type0-PDCCH scrambled by using the SI-RNTI, and uses the NTN-RNTI to monitor and receive Type0-PDCCH scrambled by using the NTN-RNTI, to obtain system information of a cell and ephemeris information.

For example, the index $i$ of the SSB is equal to 0, the configuration information of the search space of the scheduling information of the SIB 1 corresponds to the index 0 in Table 5, and the SCS=30 kHz. $\mu$ =1, $2^{\mu}$ =2, $\overline{L_{\max}}$ =8, $N_{slot}^{frame,\mu}$ =20, $O$ =4, and $M$ =2. In this case, $n_0$ =4*2+0*2=8. The terminal performs monitoring in two slots starting from a slot 8, uses the SI-RNTI to monitor and receive Type0-PDCCH scrambled by using the SI-RNTI, and uses the NTN-RNTI to monitor and receive Type0-PDCCH scrambled by using the NTN-RNTI, to obtain the system information of the cell and the ephemeris information. When a value of $i$ changes, a time domain mode of the SSB, the SIB 1, and the SIB 19 may be shown in (a) in FIG. 6.

In addition, it should be noted that a frequency domain position of the search space of the scheduling information of the SIB 1 and a frequency domain position of the search space of the scheduling information of the SIB 19 are not limited in embodiments of this application. The frequency domain position of the search space of the scheduling information of the SIB 19 may be the same as or different from the frequency domain position of the search space of the scheduling information of the SIB 1. This is not limited.

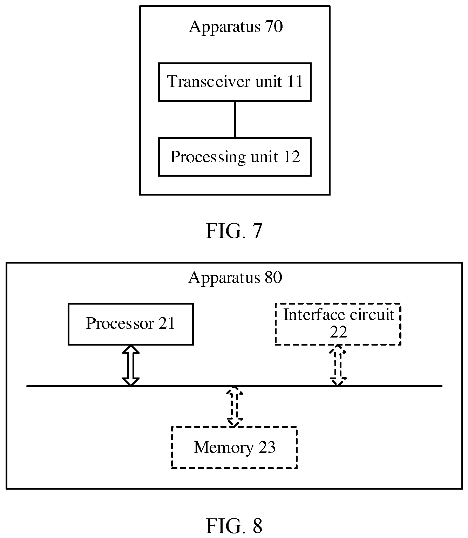

The foregoing describes in detail the communication method provided in this application with reference to FIG. 2 to FIG. 6. The following describes in detail apparatus embodiments of this application with reference to FIG. 7 and FIG. 8.

It may be understood that, to implement functions in the foregoing embodiments, the apparatus in FIG. 7 or FIG. 8 includes a corresponding hardware structure and/or software module for performing each function. A person skilled in the art should be easily aware that the units and the steps of the method in the examples described with reference to embodiments disclosed in this application may be implemented in a form of hardware or a combination of hardware and computer software in this application.

FIG. 7 and FIG. 8 each are a diagram of a structure of a possible apparatus according to an embodiment of this application. These apparatuses may be configured to implement a function of the terminal and/or the network device in the foregoing method embodiments. Therefore, the beneficial effects of the foregoing method embodiments can also be implemented.

As shown in FIG. 7, an apparatus 70 includes a transceiver unit 11 and a processing unit 12.

When the apparatus 70 is configured to implement the function of the terminal in the foregoing method embodiments, the transceiver unit 11 is configured to receive a first SSB, where the first SSB includes first configuration information, the first configuration information is used to determine a time domain position of first search space of first scheduling information, the first scheduling information is used to schedule a first SIB, the first SIB is an information block other than a SIB 1, and the first SIB is used to carry information related to random access of the terminal. The processing unit 12 is configured to determine the time domain position of the first search space based on the first configuration information. The transceiver unit 11 is further configured to detect the first scheduling information at the time domain position of the first search space.

Optionally, the processing unit 12 is specifically configured to: obtain a first offset and a first spacing based on the first configuration information, where the first offset is an offset of a CORESET of the first SIB relative to a start position of a system frame in which the first SSB is located, and the first spacing is a spacing between time domain positions of CORESETs of first SIBs corresponding to two adjacent SSBs; and determine the time domain position of the first search space based on the first offset and the first spacing.

Optionally, the first SSB further includes an index of the first SSB, information used to determine a subcarrier spacing, and a number of the system frame in which the first SSB is located. The processing unit 12 is specifically configured to determine the time domain position of the first search space based on the first offset, the first spacing, the index of the first SSB, the information used to determine the subcarrier spacing, and the number of the system frame in which the first SSB is located, where a start slot of the time domain position of the first search space is a first slot of a first system frame.

A number of the first slot satisfies: $n_1 = (O_1 * 2^{\mu} + \lfloor (i \bmod \overline{L_{\max}}) * M_1 \rfloor) \bmod N_{slot}^{frame,\mu}$ .

A number of the first system frame satisfies:

If

$$\lfloor (O_1 * 2^{\mu} + \lfloor (i \bmod \overline{L_{\max}}) * M_1 \rfloor) / N_{slot}^{frame,\mu} \rfloor = 1, \quad SFN_1 = SFN_{SSB\_i} + 1;$$

or

if

$$\lfloor (O_1 * 2^{\mu} + \lfloor (i \bmod \overline{L_{\max}}) * M_1 \rfloor) / N_{slot}^{frame,\mu} \rfloor = 0, \quad SFN_1 = SFN_{SSB\_i},$$

where

$n_1$ is the number of the first slot, $O_1$ is the first offset, $\mu$ is the information used to determine the subcarrier spacing, $2^{\mu}$ is a quantity of slots in 1 millisecond, i is the index of the first SSB, $\overline{L_{\max}}$ is a maximum quantity of candidate SSBs in a half-frame, $M_1$ is the first spacing, $N_{slot}^{frame,\mu}$ is a quantity of slots in one system frame, $SFN_1$ is the number of the first system frame, $SFN_{SSB\_i}$ is the number of the system frame in which the first SSB is located, and ⌊ ⌋ represents rounding down to the nearest integer.

Optionally, the first offset and the first spacing belong to a first table; or the first offset and the first spacing do not belong to a first table, where the first table is a table of a second offset and a second spacing, the second offset is an offset of a CORESET 0 corresponding to the first SSB relative to the start position of the system frame in which the first SSB is located, the second spacing is a spacing between time domain positions of CORESETs 0 corresponding to two adjacent SSBs, and the CORESET 0 is a CORESET corresponding to the SIB 1.

Optionally, the first offset $O_1$ satisfies: $O_1 = O \pm 1/2^{\mu}$, where $O$ is the second offset, the second offset is the offset of the CORESET 0 corresponding to the first SSB relative to the start position of the system frame in which the first SSB is located, $\mu$ is the information used to determine the subcarrier spacing, and the CORESET 0 is the CORESET corresponding to the SIB 1.

Optionally, the processing unit 12 is specifically configured to: obtain a third offset based on the first configuration information, where the third offset is an offset between a start slot of the first search space and a start slot of second search space of second scheduling information, and the second scheduling information is used to schedule the SIB 1; and determine the time domain position of the first search space based on the third offset.

Optionally, a start slot of the time domain position of the first search space is a first slot of a first system frame.

A number of the first slot satisfies: $n_1 = n_0 + Offset_1$.

A number of the first system frame satisfies:

If

$$\left\lfloor n_1 / N_{slot}^{frame,\mu} \right\rfloor = 1, \quad SFN_1 = SFN_{SSB\_i} + 1;$$

or

if

$$\left\lfloor n_1 / N_{slot}^{frame,\mu} \right\rfloor = 0, \quad SFN_1 = SFN_{SSB\_i},$$

where

$n_1$ is the number of the first slot, $n_0$ is a number of the start slot of the second search space, $Offset_1$ is the third offset, $N_{slot}^{frame,\mu}$ is a quantity of slots in one system frame, $SFN_1$ is the number of the first system frame, $SFN_{SSB\_i}$ is a number of a system frame in which the first SSB is located, and $\lfloor \ \rfloor$ represents rounding down to the nearest integer.

Optionally, the third offset belongs to a first table; or the third offset does not belong to a first table, where the first table is a table of a second offset and a second spacing, the second offset is an offset of a CORESET 0 corresponding to the first SSB relative to a start position of the system frame in which the first SSB is located, the second spacing is a spacing between time domain positions of CORESETs 0 corresponding to two adjacent SSBs, and the CORESET 0 is a CORESET corresponding to the SIB 1.

Optionally, the third offset is one slot.

Optionally, the time domain position of the first search space is the same as a time domain position of second search space of second scheduling information, and the second scheduling information is used to schedule the SIB 1. That the terminal detects the first scheduling information at the time domain position of the first search space includes: The terminal detects the first scheduling information at the time domain position of the first search space by using a first scrambling sequence, where the first scheduling information is scrambled by using the first scrambling sequence, and the first scrambling sequence is different from a second scrambling sequence used for the second scheduling information.

Optionally, the number $n_0$ of the start slot of the second search space satisfies:

$$n_0 = \left( O * 2^{\mu} + \left\lfloor (i \bmod \overline{L_{max}}) * M \right\rfloor \right) \bmod N_{slot}^{frame,\mu},$$

where

$O$ is the second offset, the second offset is the offset of the CORESET 0 corresponding to the first SSB relative to the start position of the system frame in which the first SSB is located, $\mu$ is information used to determine a subcarrier spacing, $2^{\mu}$ is a quantity of slots in 1 millisecond, $i$ is an index of the first SSB, $\overline{L_{max}}$ is a maximum quantity of candidate SSBs in a half-frame, $M$ is the second spacing, the second spacing is the spacing between time domain positions of CORESETs 0 corresponding to two adjacent SSBs, $N_{slot}^{frame,\mu}$ is the quantity of slots in one system frame, $\lfloor \ \rfloor$ represents rounding down to the nearest integer, and the CORESET 0 is the CORESET corresponding to the SIB 1.

Optionally, the first configuration information is configuration information of the time domain position of the second search space of the second scheduling information, and the second scheduling information is used to schedule the SIB 1; or the first configuration information is configuration information of the time domain position of the first search space.

Optionally, the first SIB includes a SIB 19, and the SIB 19 is used to carry information related to a satellite ephemeris.

When the apparatus 70 is configured to implement the function of the network device in the foregoing method embodiments, the transceiver unit 11 is configured to: send a first SSB, where the first SSB includes first configuration information, the first configuration information is used to determine a time domain position of first search space of first scheduling information, the first scheduling information is used to schedule a first SIB, the first SIB is an information block other than a SIB 1, and the first SIB is used to carry information related to random access of the terminal; and send the first scheduling information at the time domain position of the first search space.

Optionally, the first configuration information is used to obtain a first offset and a first spacing, where the first offset is an offset of a CORESET of the first SIB relative to a start position of a system frame in which the first SSB is located, and the first spacing is a spacing between time domain positions of CORESETs of first SIBs corresponding to two adjacent SSBs.

Optionally, the first SSB further includes an index of the first SSB, information used to determine a subcarrier spacing, and a number of the system frame in which the first SSB is located, and a start slot of the time domain position of the first search space is a first slot of a first system frame.

A number of the first slot satisfies:
$$n_1 = (O_1 * 2^\mu + \left\lfloor (i \bmod \overline{L_{max}}) * M_1 \right\rfloor) \bmod N_{slot}^{frame,\mu}.$$

A number of the first system frame satisfies:

If

$$\left\lfloor (O_1 * 2^\mu + \left\lfloor (i \bmod \overline{L_{max}}) * M_1 \right\rfloor) / N_{slot}^{frame,\mu} \right\rfloor = 1, \quad SFN_1 = SFN_{SSB\_i} + 1;$$

or

if

$$\left\lfloor (O_1 * 2^\mu + \left\lfloor (i \bmod \overline{L_{max}}) * M_1 \right\rfloor) / N_{slot}^{frame,\mu} \right\rfloor = 0, \quad SFN_1 = SFN_{SSB\_i},$$

where

$n_1$ is the number of the first slot, $O_1$ is the first offset, $\mu$ is the information used to determine the subcarrier spacing, $2^\mu$ is a quantity of slots in 1 millisecond, i is the index of the first SSB, $\overline{L_{max}}$ is a maximum quantity of candidate SSBs in a half-frame, $M_1$ is the first spacing, $N_{slot}^{frame,\mu}$ is a quantity of slots in one system frame, $SFN_1$ is the number of the first system frame, $SFN_{SSB\_i}$ is the number of the system frame in which the first SSB is located, and L J represents rounding down to the nearest integer.

Optionally, the first offset and the first spacing belong to a first table; or the first offset and the first spacing do not belong to a first table, where the first table is a table of a second offset and a second spacing, the second offset is an offset of a CORESET 0 corresponding to the first SSB relative to the start position of the system frame in which the first SSB is located, the second spacing is a spacing between time domain positions of CORESETs 0 corresponding to two adjacent SSBs, and the CORESET 0 is a CORESET corresponding to the SIB 1.

Optionally, the first offset $O_1$ satisfies: $O_1 = O \pm 1/2^\mu$, where $O$ is the second offset, the second offset is the offset of the CORESET 0 corresponding to the first SSB relative to the start position of the system frame in which the first SSB is located, $\mu$ is the information used to determine the subcarrier spacing, and the CORESET 0 is the CORESET corresponding to the SIB 1.

Optionally, the first configuration information is used to obtain a third offset, the third offset is an offset between a start slot of the first search space and a start slot of second search space of second scheduling information, and the second scheduling information is used to schedule the SIB 1.

Optionally, a start slot of the time domain position of the first search space is a first slot of a first system frame.

A number of the first slot satisfies: $n_1 = n_0 + Offset_1$.

A number of the first system frame satisfies:

If

$$\left\lfloor n_1 / N_{slot}^{frame,\mu} \right\rfloor = 1, \quad SFN_1 = SFN_{SSB\_i} + 1;$$

or

if

$$\left\lfloor n_1 / N_{slot}^{frame,\mu} \right\rfloor = 0, \quad SFN_1 = SFN_{SSB\_i},$$

where

$n_1$ is the number of the first slot, $n_0$ is a number of the start slot of the second search space, $Offset_1$ is the third offset,

$N_{slot}^{frame,\mu}$ is a quantity of slots in one system frame, $SFN_1$ is the number of the first system frame, $SFN_{SSB\_i}$ is a number of a system frame in which the first SSB is located, and $\lfloor \rfloor$ represents rounding down to the nearest integer.

Optionally, the third offset belongs to a first table; or the third offset does not belong to a first table, where the first table is a table of a second offset and a second spacing, the second offset is an offset of a CORESET 0 corresponding to the first SSB relative to a start position of the system frame in which the first SSB is located, the second spacing is a spacing between time domain positions of CORESETs 0 corresponding to two adjacent SSBs, and the CORESET 0 is a CORESET corresponding to the SIB 1.

Optionally, the third offset is one slot.

Optionally, the time domain position of the first search space is the same as a time domain position of second search space of second scheduling information, the second scheduling information is used to schedule the SIB 1, the first scheduling information is scrambled by using a first scrambling sequence, and the first scrambling sequence is different from a second scrambling sequence used for the second scheduling information.

Optionally, the number $n_0$ of the start slot of the second search space satisfies:

$$n_0 = \left(O * 2^{\mu} + \left\lfloor (i \bmod \overline{L_{max}}) * M \right\rfloor\right) \bmod N_{slot}^{frame,\mu},$$

where

$O$ is the second offset, the second offset is the offset of the CORESET 0 corresponding to the first SSB relative to the start position of the system frame in which the first SSB is located, $\mu$ is information used to determine a subcarrier spacing, $2^{\mu}$ is a quantity of slots in 1 millisecond, $i$ is an index of the first SSB, $\overline{L_{max}}$ is a maximum quantity of candidate SSBs in a half-frame, M is the second spacing, the second spacing is the spacing between time domain positions of CORESETs 0 corresponding to two adjacent SSBs, $N_{slot}^{frame,\mu}$ is the quantity of slots in one system frame, $\lfloor \rfloor$ represents rounding down to the nearest integer, and the CORESET 0 is the CORESET corresponding to the SIB 1.

Optionally, the first configuration information is configuration information of the time domain position of the second search space of the second scheduling information, and the second scheduling information is used to schedule the SIB 1; or the first configuration information is configuration information of the time domain position of the first search space.

Optionally, the first SIB includes a SIB 19, and the SIB 19 is used to carry information related to a satellite ephemeris.

For more detailed descriptions of the transceiver unit 11 and the processing unit 12, refer to related descriptions in the foregoing method embodiments. Details are not described herein again.

As shown in FIG. 8, an apparatus 80 includes a processor 21. The processor 21 is coupled to a memory 23, and the memory 23 is configured to store instructions. When the apparatus 80 is configured to implement the foregoing method, the processor 21 is configured to execute the instructions in the memory 23, to implement a function of the foregoing processing unit 12.

Optionally, the apparatus 80 further includes the memory 23.

Optionally, the apparatus 80 further includes an interface circuit 22. The processor 21 and the interface circuit 22 are coupled to each other. It may be understood that the interface circuit 22 may be a transceiver or an input/output interface. When the apparatus 80 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 80 is a chip used in a terminal and/or a network device, the chip implements a function of the terminal and/or the network device in the foregoing method embodiments. The chip receives information from another module (for example, a radio frequency module or an antenna) in the terminal and/or the network device, where the information is sent by another apparatus to the terminal and/or the network device; or the chip sends information to another module (for example, a radio frequency module or an antenna) in the terminal and/or the network device, where the information is sent by the terminal and/or the network device to another apparatus.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a computer-readable storage medium. The computer-readable storage medium stores computer instructions used to implement the method performed by the terminal and/or the network device in the foregoing method embodiments.

This application further provides a computer program product, including instructions. When the instructions are executed by a computer, the method performed by the terminal and/or the network device in the foregoing method embodiments is implemented.

This application further provides a communication system. The communication system includes at least one of the terminal and/or the network device in the foregoing embodiments.

For explanations and beneficial effects of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, to enable the processor to read information from the storage medium and write information into the storage medium. Certainly, the storage medium may alternatively be a component of the processor. The processor and the storage medium may be disposed in an ASIC. In addition, the ASIC may be located in the terminal and/or the network device. Certainly, the processor and the storage medium may exist in the terminal and/or the network device as discrete assemblies.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

Unless otherwise stated, meanings of all technical and scientific terms used in embodiments of this application are the same as those usually understood by a person skilled in the technical field of this application. Terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   receiving, by a terminal, a first synchronization signal/physical broadcast channel block SSB, wherein the first SSB comprises first configuration information, the first configuration information is used to determine a time domain position of first search space of first scheduling information, the first scheduling information is used to schedule a first system information block SIB, the first SIB is an information block other than a system information block 1 SIB 1, and the first SIB is used to carry information related to random access of the terminal;
   determining, by the terminal, the time domain position of the first search space based on the first configuration information; and
   detecting, by the terminal, the first scheduling information at the time domain position of the first search space.

2. The method according to claim 1, wherein the determining, by the terminal, the time domain position of the first search space based on the first configuration information comprises:

   obtaining, by the terminal, a first offset and a first spacing based on the first configuration information, wherein the first offset is an offset of a control resource set CORESET of the first SIB relative to a start position of a system frame in which the first SSB is located, and the first spacing is a spacing between time domain positions of CORESETs of first SIBs corresponding to two adjacent SSBs; and
   determining, by the terminal, the time domain position of the first search space based on the first offset and the first spacing.

3. The method according to claim 2, wherein the first SSB further comprises an index of the first SSB, information used to determine a subcarrier spacing, and a number of the system frame in which the first SSB is located; and
   the determining, by the terminal, the time domain position of the first search space based on the first offset and the first spacing comprises:

   determining, by the terminal, the time domain position of the first search space based on the first offset, the first spacing, the index of the first SSB, the information used to determine the subcarrier spacing, and the number of the system frame in which the first SSB is located, wherein a start slot of the time domain position of the first search space is a first slot of a first system frame;

   a number of the first slot satisfies: $n_1 = (O_1 * 2^{\mu} + \left\lfloor (i \bmod \overline{L_{\max}}) * M_1 \right\rfloor) \bmod N_{slot}^{frame,\mu}$ ; and
   a number of the first system frame satisfies:

   if

   $$\left\lfloor (O_1 * 2^{\mu} + \left\lfloor (i \bmod \overline{L_{\max}}) * M_1 \right\rfloor) / N_{slot}^{frame,\mu} \right\rfloor = 1, \quad SFN_1 = SFN_{SSB\_i} + 1;$$

   or
   if

   $$\left\lfloor (O_1 * 2^{\mu} + \left\lfloor (i \bmod \overline{L_{\max}}) * M_1 \right\rfloor) / N_{slot}^{frame,\mu} \right\rfloor = 0, \quad SFN_1 = SFN_{SSB\_i},$$

   wherein
   $n_1$ is the number of the first slot, $O_1$ is the first offset, $\mu$ is the information used to determine the subcarrier spacing, $2^{\mu}$ is a quantity of slots in 1 millisecond, i is the index of the first SSB, $\overline{L_{\max}}$ is a maximum quantity of candidate SSBs in a half-frame, $M_1$ is the first spacing, $N_{slot}^{frame,\mu}$ is a quantity of slots in one system frame, $SFN_1$ is the number of the first system frame, $SFN_{SSB\_i}$ is the number of the system frame in which the first SSB is located, and ⌊ ⌋ represents rounding down to the nearest integer.

4. The method according to claim 2 or 3, wherein

the first offset and the first spacing belong to a first table; or the first offset and the first spacing do not belong to a first table, wherein

the first table is a table of a second offset and a second spacing, the second offset is an offset of a control resource set 0 CORESET 0 corresponding to the first SSB relative to the start position of the system frame in which the first SSB is located, the second spacing is a spacing between time domain positions of CORESETs 0 corresponding to two adjacent SSBs, and the CORESET 0 is a CORESET corresponding to the SIB 1.

5. The method according to any one of claims 2 to 4, wherein

the first offset $O_1$ satisfies: $O_1 = O \pm 1/2^\mu$, wherein $O$ is the second offset, the second offset is the offset of the control resource set 0 CORESET 0 corresponding to the first SSB relative to the start position of the system frame in which the first SSB is located, $\mu$ is the information used to determine the subcarrier spacing, and the CORESET 0 is the control resource set CORESET corresponding to the SIB 1.

6. The method according to claim 1, wherein the determining, by the terminal, the time domain position of the first search space based on the first configuration information comprises:

obtaining, by the terminal, a third offset based on the first configuration information, wherein the third offset is an offset between a start slot of the first search space and a start slot of second search space of second scheduling information, and the second scheduling information is used to schedule the SIB 1; and

determining, by the terminal, the time domain position of the first search space based on the third offset.

7. The method according to claim 6, wherein

a start slot of the time domain position of the first search space is a first slot of a first system frame;
a number of the first slot satisfies: $n_1 = n_0 + Offset_1$; and
a number of the first system frame satisfies:

if

$$\left\lfloor n_1 / N_{slot}^{frame,\mu} \right\rfloor = 1, \quad SFN_1 = SFN_{SSB\_i} + 1;$$

or
if

$$\left\lfloor n_1 / N_{slot}^{frame,\mu} \right\rfloor = 0, \quad SFN_1 = SFN_{SSB\_i},$$

wherein
$n_1$ is the number of the first slot, $n_0$ is a number of the start slot of the second search space, $Offset_1$ is the third offset, $N_{slot}^{frame,\mu}$ is a quantity of slots in one system frame, $SFN_1$ is the number of the first system frame, $SFN_{SSB\_i}$ is a number of a system frame in which the first SSB is located, and $\lfloor \rfloor$ represents rounding down to the nearest integer.

8. The method according to claim 6 or 7, wherein

the third offset belongs to a first table; or the third offset does not belong to a first table, wherein
the first table is a table of a second offset and a second spacing, the second offset is an offset of a control resource set 0 CORESET 0 corresponding to the first SSB relative to a start position of the system frame in which the first SSB is located, the second spacing is a spacing between time domain positions of CORESETs 0 corresponding to two adjacent SSBs, and the CORESET 0 is a control resource set CORESET corresponding to the SIB 1.

9. The method according to any one of claims 6 to 8, wherein the third offset is one slot.

10. The method according to claim 1, wherein the time domain position of the first search space is the same as a time domain position of second search space of second scheduling information, and the second scheduling information is used to schedule the SIB 1; and

the detecting, by the terminal, the first scheduling information at the time domain position of the first search space comprises:

detecting, by the terminal, the first scheduling information at the time domain position of the first search space by using a first scrambling sequence, wherein the first scheduling information is scrambled by using the first scrambling sequence, and the first scrambling sequence is different from a second scrambling sequence used for the second scheduling information.

11. The method according to any one of claims 6 to 10, wherein the number $n_0$ of the start slot of the second search space satisfies:

$$n_0 = (O*2^\mu + \left\lfloor (i \bmod \overline{L_{\max}})*M \right\rfloor) \bmod N_{slot}^{frame,\mu},$$

wherein

$O$ is the second offset, the second offset is the offset of the control resource set 0 CORESET 0 corresponding to the first SSB relative to the start position of the system frame in which the first SSB is located, $\mu$ is information used to determine a subcarrier spacing, $2^\mu$ is a quantity of slots in 1 millisecond, $i$ is an index of the first SSB, $\overline{L_{\max}}$ is a maximum quantity of candidate SSBs in a half-frame, M is the second spacing, the second spacing is the spacing between time domain positions of CORESETs 0 corresponding to two adjacent SSBs, $N_{slot}^{frame,\mu}$ is the quantity of slots in one system frame, L J represents rounding down to the nearest integer, and the CORESET 0 is the control resource set CORESET corresponding to the SIB 1.

12. The method according to any one of claims 1 to 11, wherein

the first configuration information is configuration information of the time domain position of the second search space of the second scheduling information, and the second scheduling information is used to schedule the SIB 1; or

the first configuration information is configuration information of the time domain position of the first search space.

13. The method according to any one of claims 1 to 12, wherein
the first SIB comprises a SIB 19, and the SIB 19 is used to carry information related to a satellite ephemeris.

14. A communication method, wherein the method comprises:

sending, by a network device, a first synchronization signal/physical broadcast channel block SSB, wherein the first SSB comprises first configuration information, the first configuration information is used to determine a time domain position of first search space of first scheduling information, the first scheduling information is used to schedule a first system information block SIB, the first SIB is an information block other than a system information block 1 SIB 1, and the first SIB is used to carry information related to random access of the terminal; and
sending, by the network device, the first scheduling information at the time domain position of the first search space.

15. The method according to claim 14, wherein
the first configuration information is used to obtain a first offset and a first spacing, wherein the first offset is an offset of a control resource set CORESET of the first SIB relative to a start position of a system frame in which the first SSB is located, and the first spacing is a spacing between time domain positions of CORESETs of first SIBs corresponding to two adjacent SSBs.

16. The method according to claim 15, wherein

the first SSB further comprises an index of the first SSB, information used to determine a subcarrier spacing, and a number of the system frame in which the first SSB is located, and a start slot of the time domain position of the first search space is a first slot of a first system frame;

a number of the first slot satisfies: $n_1 = (O_1*2^\mu + \left\lfloor (i \bmod \overline{L_{\max}})*M_1 \right\rfloor) \bmod N_{slot}^{frame,\mu}$ ; and
a number of the first system frame satisfies:

if

$$\left\lfloor (O_1 * 2^\mu + \left\lfloor (i \bmod \overline{L_{\max}}) * M_1 \right\rfloor) / N_{slot}^{frame,\mu} \right\rfloor = 1, \quad SFN_1 = SFN_{SSB\_i} + 1;$$

or
if

$$\left\lfloor (O_1 * 2^\mu + \left\lfloor (i \bmod \overline{L_{\max}}) * M_1 \right\rfloor) / N_{slot}^{frame,\mu} \right\rfloor = 0, \quad SFN_1 = SFN_{SSB\_i},$$

wherein

$n_1$ is the number of the first slot, $O_1$ is the first offset, $\mu$ is the information used to determine the subcarrier spacing, $2^\mu$ is a quantity of slots in 1 millisecond, i is the index of the first SSB, $\overline{L_{\max}}$ is a maximum quantity of candidate SSBs in a half-frame, $M_1$ is the first spacing, $N_{slot}^{frame,\mu}$ is a quantity of slots in one system frame, $SFN_1$ is the number of the first system frame, $SFN_{SSB\_i}$ is the number of the system frame in which the first SSB is located, and L J represents rounding down to the nearest integer.

17. The method according to claim 15 or 16, wherein

the first offset and the first spacing belong to a first table; or the first offset and the first spacing do not belong to a first table, wherein
the first table is a table of a second offset and a second spacing, the second offset is an offset of a control resource set 0 CORESET 0 corresponding to the first SSB relative to the start position of the system frame in which the first SSB is located, the second spacing is a spacing between time domain positions of CORESETs 0 corresponding to two adjacent SSBs, and the CORESET 0 is a CORESET corresponding to the SIB 1.

18. The method according to any one of claims 15 to 17, wherein
the first offset $O_1$ satisfies: $O_1 = O \pm 1/2^\mu$, wherein $O$ is the second offset, the second offset is the offset of the control resource set 0 CORESET 0 corresponding to the first SSB relative to the start position of the system frame in which the first SSB is located, $\mu$ is the information used to determine the subcarrier spacing, and the CORESET 0 is the control resource set CORESET corresponding to the SIB 1.

19. The method according to claim 14, wherein
the first configuration information is used to obtain a third offset, the third offset is an offset between a start slot of the first search space and a start slot of second search space of second scheduling information, and the second scheduling information is used to schedule the SIB 1.

20. The method according to claim 19, wherein

a start slot of the time domain position of the first search space is a first slot of a first system frame;
a number of the first slot satisfies: $n_1 = n_0 + Offset_1$; and
a number of the first system frame satisfies:

if

$$\left\lfloor n_1 / N_{slot}^{frame,\mu} \right\rfloor = 1, \quad SFN_1 = SFN_{SSB\_i} + 1;$$

or
if

$$\left\lfloor n_1 / N_{slot}^{frame,\mu} \right\rfloor = 0, \quad SFN_1 = SFN_{SSB\_i},$$

wherein

$n_1$ is the number of the first slot, $n_0$ is a number of the start slot of the second search space, $Offset_1$ is the third offset, $N_{slot}^{frame,\mu}$ is a quantity of slots in one system frame, $SFN_1$ is the number of the first system frame, $SFN_{SSB\_i}$ is a number of a system frame in which the first SSB is located, and $\lfloor\ \rfloor$ represents rounding down to the nearest integer.

21. The method according to claim 19 or 20, wherein

the third offset belongs to a first table; or the third offset does not belong to a first table, wherein
the first table is a table of a second offset and a second spacing, the second offset is an offset of a control resource set 0 CORESET 0 corresponding to the first SSB relative to a start position of the system frame in which the first SSB is located, the second spacing is a spacing between time domain positions of CORESETs 0 corresponding to two adjacent SSBs, and the CORESET 0 is a control resource set CORESET corresponding to the SIB 1.

22. The method according to any one of claims 19 to 21, wherein the third offset is one slot.

23. The method according to claim 14, wherein the time domain position of the first search space is the same as a time domain position of second search space of second scheduling information, the second scheduling information is used to schedule the SIB 1, the first scheduling information is scrambled by using a first scrambling sequence, and the first scrambling sequence is different from a second scrambling sequence used for the second scheduling information.

24. The method according to any one of claims 19 to 23, wherein the number $n_0$ of the start slot of the second search space satisfies:

$$n_0 = (O*2^{\mu} + \left\lfloor (i \bmod \overline{L_{\max}})*M \right\rfloor) \bmod N_{slot}^{frame,\mu},$$

wherein
$O$ is the second offset, the second offset is the offset of the control resource set 0 CORESET 0 corresponding to the first SSB relative to the start position of the system frame in which the first SSB is located, $\mu$ is information used to determine a subcarrier spacing, $2^{\mu}$ is a quantity of slots in 1 millisecond, $i$ is an index of the first SSB, $\overline{L_{\max}}$ is a maximum quantity of candidate SSBs in a half-frame, M is the second spacing, the second spacing is the spacing between time domain positions of CORESETs 0 corresponding to two adjacent SSBs, $N_{slot}^{frame,\mu}$ is the quantity of slots in one system frame, $\lfloor\ \rfloor$ represents rounding down to the nearest integer, and the CORESET 0 is the control resource set CORESET corresponding to the SIB 1.

25. The method according to any one of claims 14 to 24, wherein

the first configuration information is configuration information of the time domain position of the second search space of the second scheduling information, and the second scheduling information is used to schedule the SIB 1; or
the first configuration information is configuration information of the time domain position of the first search space.

26. The method according to any one of claims 14 to 25, wherein
the first SIB comprises a SIB 19, and the SIB 19 is used to carry information related to a satellite ephemeris.

27. A communication apparatus, comprising:
a processor, configured to execute a computer program stored in a memory, to enable the apparatus to perform the method according to any one of claims 1 to 13, or perform the method according to any one of claims 14 to 26.

28. The apparatus according to claim 27, wherein the apparatus further comprises the memory.

29. A computer-readable storage medium, wherein the computer-readable storage medium stores a computer program, and when the computer program is run on a computer, the computer is enabled to perform the method according to any one of claims 1 to 13, or perform the method according to any one of claims 14 to 26.

30. A computer program product, wherein the computer program product comprises instructions used to perform the method according to any one of claims 1 to 13, or comprises instructions used to perform the method according to any one of claims 14 to 26.

31. A communication system, comprising:

   a terminal configured to perform the method according to any one of claims 1 to 13; and
   a network device configured to perform the method according to any one of claims 14 to 26.

32. A chip, wherein the chip comprises a processor and a communication interface, and the processor reads, through the communication interface, instructions stored in a memory, to perform the method according to any one of claims 1 to 13, or perform the method according to any one of claims 14 to 26.

FIG. 1

FIG. 2

FIG. 3

EP 4 542 879 A1

400

| Network device | | Terminal |

401: First SSB (first configuration information) →

402: Determine a time domain position of first search space of first scheduling information based on the first configuration information, where the first scheduling information is used to schedule a first SIB other than a SIB 1

403: First scheduling information →

FIG. 4

500

| Base station | | Terminal |

501: SSB →

502: Parse a PSS/an SSS/a PBCH, to obtain an index of the SSB, configuration information of search space of scheduling information of a SIB 1, and configuration information of search space of scheduling information of a SIB 19

503: SIB 1 →

504: SIB 19 →

505: Receive and parse the SIB 1 and the SIB 19 based on the index of the SSB, the configuration information of the search space of the scheduling information of the SIB 1, and the configuration information of the search space of the scheduling information of the SIB 19

← 506: Random access preamble

FIG. 5

EP 4 542 879 A1

SFN #0

| | | | | | | | | SIB 1 #0 | SIB 19 #0 | SIB 1 #1 | SIB 19 #1 | SIB 1 #2 | SIB 19 #2 | SIB 1 #3 | SIB 19 #3 | SIB 1 #4 | SIB 19 #4 | SIB 1 #5 | SIB 19 #5 | SIB 1 #6 | SIB 19 #6 | SIB 1 #7 | SIB 19 #7 |

SSBs #0 and 1 | SSBs #2 and 3 | SSBs #4 and 5 | SSBs #6 and 7

SFN #1

0  1  2  3  4  5  6  7  8  9  10  11  12  13  14  15  16  17  18  19  0  1  2  3  4  5  6  7  8  9  10 11 12 13 14 15 16 17 18 19

(a)

SFN #0

SSBs #0 and 1 | SSBs #2 and 3 | SSBs #4 and 5 | SSBs #6 and 7 | SIB 1 #0 | SIB 19 #0 | SIB 1 #1 | SIB 19 #1 | SIB 1 #2 | SIB 19 #2 | SIB 1 #3 | SIB 19 #3 | SIB 1 #4 | SIB 19 #4 | SIB 1 #5 | SIB 19 #5 | SIB 1 #6 | SIB 19 #6 | SIB 1 #7 | SIB 19 #7

SFN #1

0  1  2  3  4  5  6  7  8  9  10  11  12  13  14  15  16  17  18  19  0  1  2  3  4  5  6  7  8  9  10 11 12 13 14 15 16 17 18 19

(b)

FIG. 6

Apparatus 70

Transceiver unit 11

Processing unit 12

FIG. 7

Apparatus 80

Processor 21

Interface circuit 22

Memory 23

FIG. 8

<table>
<tr><td colspan="2" align="center">**INTERNATIONAL SEARCH REPORT**</td><td colspan="2">International application No.<br><br>**PCT/CN2023/101650**</td></tr>
<tr><td colspan="4">**A. CLASSIFICATION OF SUBJECT MATTER**<br><br>H04B7/185(2006.01)i<br><br>According to International Patent Classification (IPC) or to both national classification and IPC</td></tr>
<tr><td colspan="4">**B. FIELDS SEARCHED**</td></tr>
<tr><td colspan="4">Minimum documentation searched (classification system followed by classification symbols)<br><br>IPC: H04W, H04B, H04Q</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br><br>3GPP, CNABS, CNTXT, ENTXTC, WPABSC, DWPI: 非SIB1, 配置, 时延, 卫星, 星历, 延时, 时延, non-SIB1, configuration, delay, ephemeris, epicheirema, GEO, LEO, MEO, RMSI, satellite, SSB, SIB, SIB1, SIB19, SIB4, SIB5, SIB6, SIB7, SIB8</td></tr>
<tr><td colspan="4">**C. DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">CN 114375040 A (HUAWEI TECHNOLOGIES CO., LTD.) 19 April 2022 (2022-04-19)<br>description, paragraphs [0185]-[0191]</td><td>1-32</td></tr>
<tr><td>A</td><td colspan="2">CN 114423022 A (SPREADTRUM COMMUNICATIONS (SHANGHAI) CO., LTD.) 29 April 2022 (2022-04-29)<br>entire document</td><td>1-32</td></tr>
<tr><td>A</td><td colspan="2">US 2021242935 A1 (QUALCOMM INC.) 05 August 2021 (2021-08-05)<br>entire document</td><td>1-32</td></tr>
<tr><td>A</td><td colspan="2">US 2022078746 A1 (LG ELECTRONICS INC.) 10 March 2022 (2022-03-10)<br>entire document</td><td>1-32</td></tr>
<tr><td>A</td><td colspan="2">WO 2021062802 A1 (HUAWEI TECHNOLOGIES CO., LTD.) 08 April 2021 (2021-04-08)<br>entire document</td><td>1-32</td></tr>
<tr><td>A</td><td colspan="2">QUALCOMM INC. "SSB Arrangements, BWP Operation and Other Issues for NTN"<br>*3GPP TSG RAN WG1 #102-e R1-2006807*, 28 August 2020 (2020-08-28),<br>entire document</td><td>1-32</td></tr>
<tr><td colspan="2">☐ Further documents are listed in the continuation of Box C.</td><td colspan="2">☑ See patent family annex.</td></tr>
<tr><td colspan="2">* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed</td><td colspan="2">"T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family</td></tr>
<tr><td colspan="2">Date of the actual completion of the international search<br><br>**09 October 2023**</td><td colspan="2">Date of mailing of the international search report<br><br>**13 October 2023**</td></tr>
<tr><td colspan="2">Name and mailing address of the ISA/CN<br><br>**China National Intellectual Property Administration (ISA/CN)**<br>**China No. 6, Xitucheng Road, Jimenqiao, Haidian District, Beijing 100088**</td><td colspan="2">Authorized officer<br><br><br><br>Telephone No.</td></tr>
</table>

Form PCT/ISA/210 (second sheet) (July 2022)

International application No.

**PCT/CN2023/101650**

| Patent document cited in search report | | | Publication date (day/month/year) | Patent family member(s) | | | Publication date (day/month/year) |
|---|---|---|---|---|---|---|---|
| CN | 114375040 | A | 19 April 2022 | WO | 2022078176 | A1 | 21 April 2022 |
| CN | 114423022 | A | 29 April 2022 | None | | | |
| US | 2021242935 | A1 | 05 August 2021 | EP | 4097874 | A2 | 07 December 2022 |
| | | | | WO | 2021216150 | A2 | 28 October 2021 |
| | | | | CN | 115004579 | A | 02 September 2022 |
| | | | | IN | 202227036980 | A | 21 October 2022 |
| US | 2022078746 | A1 | 10 March 2022 | WO | 2020197271 | A1 | 01 October 2020 |
| WO | 2021062802 | A1 | 08 April 2021 | CN | 114365547 | A | 15 April 2022 |

Form PCT/ISA/210 (patent family annex) (July 2022)

**EP 4 542 879 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210976529